(19) Europäisches Patentamt
European Patent Office
Office européen des brevets

(11) EP 4 613 821 A1

(12) **EUROPEAN PATENT APPLICATION**

(43) Date of publication:
**10.09.2025 Bulletin 2025/37**

(21) Application number: **24161254.8**

(22) Date of filing: **04.03.2024**

(51) International Patent Classification (IPC):
***C09D 7/80*** *(2018.01)*

(52) Cooperative Patent Classification (CPC):
**C09D 7/80; C09D 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Jotun A/S**
**3202 Sandefjord (NO)**

(72) Inventors:
- **FLENSTAD, Siri G**
  **3209 Sandefjord (NO)**
- **JENSEN, Hanne**
  **3209 Sandefjord (NO)**

(74) Representative: **Marks & Clerk LLP**
**15 Fetter Lane**
**London EC4A 1BW (GB)**

(54) **METHOD**

(57) The present invention provides a method of preparing a coating composition for storage in a container for at least 28 days, preferably at 15-40 °C, comprising:
(i) providing said composition;
(ii) heating said composition to a treatment temperature of greater than 70 °C by ohmic heating;
(iii) holding said composition at said treatment temperature for at least 1 second; and
(iv) cooling said composition;
wherein said composition comprises a binder, water and optionally biocide.

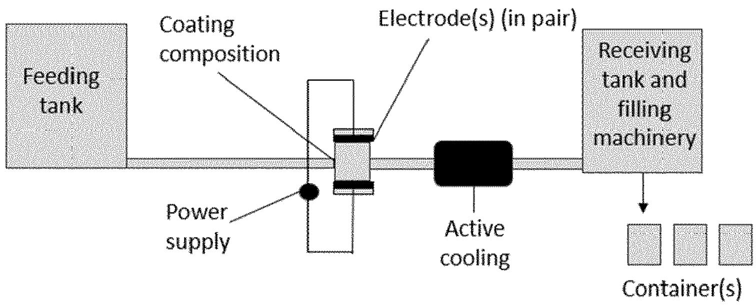


Figure 1



Processed by Luminess, 75001 PARIS (FR)

## Description

INTRODUCTION

The present invention relates to a method of preparing a coating composition for storage in a container for at least 28 days, preferably at 15-40 °C (i.e. in conditions with no temperature or humidity control). The method comprises heating the coating composition by ohmic heating, and holding the composition at a treatment temperature for a certain period of time. The invention also relates to a method for storing a coating composition in a container for at least 28 days comprising preparing the coating composition by the method herein described, and then storing the composition. Additionally, the present invention relates to a stored coating composition obtainable by the afore-mentioned method, as well as to a container containing a coating composition, wherein said container has been stored at a storage temperature of 15-40 °C for at least 28 days. Typical coating compositions treated in the methods described herein comprise a binder, water and optionally biocide.

BACKGROUND

There is a drive in the paint industry from regulatory authorities and consumers to produce waterborne products to replace more conventional solvent borne products (e.g. paints, coating compositions) to reduce volatile organic compounds (VOCs). Unlike solvent borne compositions, aqueous compositions are prone to microbial attack in the wet state as the environment is suitable for survival and growth of microorganisms.

Active substances, often referred to as biocides or wet state preservatives, are used in water borne products such as aqueous coating compositions to provide microbial protection whilst the product is prepared and stored in its packaging. Without preservatives, aqueous coating compositions will experience uncontrolled microbial growth resulting in spoilage of the product. This usually manifests in an unpleasant smell, and sometimes a change in, for example, viscosity, colour and/or pH. However, both the number of, and the use concentrations of, preservatives need to be lowered to comply with different biocide regulations introduced globally. The European Biocide Regulation is today the most stringent and restrictive biocide regulation in place. Conventionally used preservatives, such as the isothiazolinones (e.g. MIT and CIT), may be restricted in the future due to their skin sensitizing properties. Isothiazolinones have been used in the paint industry since the 1980s, and they are very effective both for wet state and dry film preservation. In recent years, a strong increase in allergic contact dermatitis has been observed resulting from the use of personal care products containing isothiazolinones.

Different Ecolabels have specific criteria and limitations for the use of sensitizing preservatives in paints. In general, Ecolabels do not allow paint that is classified as skin sensitizing (H317, contains isothiazolinones above their Specific Concentration Limit (SCL)). Most of the isothiazolinones are not effective below the SCL.

As an alternative or additional strategy, a number of physical methods have also been employed to provide protection against microbial contamination, including microwave treatment and heat treatment by heat transfer, e.g. from hot water or hot air.

US 5,529,749 discloses a method for reducing the microbial-contamination of aqueous multiphase compositions containing synthetic resin, e.g. latex resins, using microwave radiation. Specifically, US 5,529,749 teaches that whilst heat treatment of acrylic and vinyl acetate/maleic acid ester compositions at temperatures above 100 °C causes irreversible damage to the compositions, i.e. coagulation and deposition on the walls, that this problem may be overcome by using microwave radiation. US 5,529,749 teaches that the preferred sterilization temperature, based on microwave radiation, is 50-100 °C, with sterilisation time depending on the apparatus-related amount flowing through, the temperature and the microwave output. In the "discontinuous" example in US 5,529,749 10 g of multi-phase composition is treated for 10 minutes or 2 minutes with microwave beams (2.45 GHz), and temperatures of 80-120 °C are achieved. These result in <100 cfu/ml microbes in the treated compositions. In the "continuous" example, the residence time in the microwave heating zone is 10 to 180 seconds, which is reported to achieve temperatures of 60, 70 and 80 °C. This is followed by a "holding zone" where the residence time is 1, 3 or 5 minutes. The treated examples which experience a temperature of 70 or 80 °C have <100 cfu/ml microbes. Neither the details of the set-up of the microwave unit nor the volume of the composition treated in the "continuous" example are reported.

The teaching of WO2016/089696 contradicts US 5,529,749. WO2016/089696 discloses a method for pasteurising coating compositions by applying heat using air in ovens, hot water baths or through heating via heated pipes or vessels, without causing damage to the composition. The examples of this application show that relatively small volumes of compositions may be successfully sterilised in this method, seemingly without impacting on the viscosity of the paint (which indicates the occurrence of additional polymerisation or crosslinking). However, as also shown in the examples of this application, the lag time to achieve pasteurisation temperatures increases as the volume of composition to be treated increases, and in some cases it proved impossible to raise the internal temperature of the composition to the pasteurisation temperature. WO2016/089696 advocates for storage of the treated paint in an environment in which bacteria do not grow, e.g. using air conditioning technology to achieve temperatures of less than 15 or 10 °C.

Finally, WO2022/192565 builds on the method disclosed in WO2016/089696 and teaches that the composition should be dynamically moved through the heat treatment. This is preferably achieved through continuous piping through a heat source. The time duration of the process may be from about 1 minute to about 5 minutes. In an alternative set up described in WO2022/192565, which uses a rotary cooker-cooler, the composition is first stored into containers and then heat is applied at 100 °C or higher for 30-50 minutes, whilst dynamically moving the composition. In the examples #10 cans are employed, which are said to have a volume of 2.9-3.1 L (102-111 oz). As in WO2016/089696, this application advocates for storage of the treated paint in an environment in which bacteria do not grow, e.g. using air conditioning technology to achieve temperatures of less than 15 or 10 °C.

SUMMARY OF INVENTION

Viewed from a first aspect, the present invention provides a method of preparing a coating composition for storage in a container for at least 28 days, preferably at 15-40 °C, comprising:

(i) providing said composition;
(ii) heating said composition to a treatment temperature of greater than 70 °C by ohmic heating;
(iii) holding said composition at said treatment temperature for at least 1 second; and
(iv) cooling said composition;

wherein said composition comprises a binder, water and optionally biocide.

Viewed from a further aspect, the present invention provides a method for storing a coating composition in a container for at least 28 days comprising:

(i) preparing the composition for storage by the method hereinbefore described; and
(ii) storing said composition in a container for at least 28 days, preferably at 15-40 °C.

Viewed from a further aspect, the present invention provides a stored coating composition obtainable by the method as hereinbefore described, wherein said composition shows no physical evidence of microbial contamination after said storage and/or the Stormer viscosity of said composition changes by less than ±15% after said storage and/or the Cone and Plate viscosity of said coating composition changes by less than ±25% and more preferably ±20% after said storage.

Viewed from a yet further aspect, the present invention provides a container containing a coating composition comprising a binder, water, and optionally biocide, wherein said container has been stored at a storage temperature of 15-40 °C for at least 28 days, and said composition shows no physical evidence of microbial contamination after said storage; and/or the Stormer viscosity of said composition changes by less than ±15% after said storage and/or the Cone and Plate viscosity of said coating composition changes by less than ±25% and more preferably ±20% after said storage.

DEFINITIONS

As used herein, the term "coating composition" refers to a composition that, when applied to a surface, forms a film or coating thereon.

As used herein, the term "aqueous composition" or "aqueous coating composition" refers to a composition wherein the continuous phase is water. Depending on the nature of the binder, the aqueous composition may comprise polymer particles or droplets dispersed therein.

As used herein, the term "dispersion" refers to a dispersion of particles or droplets dispersed in a continuous aqueous liquid phase. Typically, the continuous liquid phase is water. Droplets dispersed in water can be referred to as an emulsion. In the present invention the term "dispersion" refers to both particles and droplets (emulsions) dispersed in water.

As used herein, the term "ohmic heating" refers to a heating process wherein an alternating current is passed through a composition, and the resistance of the composition per se generates heat. This term is intended to encompass joule heating, electrical resistance heating, direct electrical resistance heating, electrical resistive heating, electroheating and electroconductive heating.

As used herein, the term "treatment temperature" refers to the temperature achieved by the composition *per se,* via ohmic heating. The temperature needs to be high enough to kill any microorganisms present therein.

As used herein, the term "holding" or "hold time" refers to the length of time the composition *per se* is retained at, or above, the treatment temperature.

As used herein, the term "container" refers to any suitable container for storage of coating compositions, such as paint. Examples include cans, drums and tanks. The containers may be made of plastic or metal.

As used herein, the term microorganisms may be bacteria, mould and/or yeast.

As used herein, the term poly (meth)acrylic refers to a polymer comprising repeat units derived from (meth)acrylic monomers. This encompasses (meth)acrylate monomers. Generally, a poly(meth)acrylic will comprise at least 50 wt% repeat units derived from (meth)acrylic monomers, based on the dry weight of the polymer, i.e. acrylic, methacrylic, acrylate and/or methacrylate monomers. Generally, a poly(meth)acrylic will comprise less than 10 wt% repeat units derived from styrene monomers, based on the dry weight of the polymer. Generally, a poly(meth)acrylic will comprise less than 10 wt% repeat units derived from vinyl acetate monomers, based on the dry weight of the polymer.

As used herein, the term poly styrene (meth)acrylic refers to a polymer comprising repeat units derived from styrene monomers and (meth)acrylic monomers. The latter encompasses (meth)acrylate monomers. Generally a poly styrene (meth)acrylic will comprise at least 10 wt% repeat units derived from styrene monomers, based on the dry weight of the polymer. Generally a poly styrene (meth)acrylic will comprise at least 50 wt% repeat units derived from (meth)acrylic monomers, i.e. acrylic, methacrylic, acrylate and/or methacrylate monomers, based on the dry weight of the polymer. Generally, a poly styrene (meth)acrylic will comprise less than 10 wt% repeat units derived from vinyl acetate monomers, based on the dry weight of the polymer.

As used herein, the term poly(ethylene-vinyl acetate) refers to a polymer comprising repeat units derived from ethylene monomers and vinyl acetate monomers. Generally a poly(ethylene-vinyl acetate) will comprise at least 40 wt% repeat units derived from ethylene monomers, based on the dry weight of the polymer. Generally a poly(ethylene-vinyl acetate) will comprise at least 10 wt% repeat units derived from vinyl acetate monomers, based on the dry weight of the polymer. Generally a poly(ethylene-vinyl acetate) will comprise less than 10 wt% repeat units derived from (meth)acrylic monomers, i.e. acrylic, methacrylic, acrylate and/or methacrylate monomers, based on the dry weight of the polymer.

As used herein, the term poly vinyl acetate (meth)acrylic refers to a polymer comprising repeat units derived from vinyl acetate monomers and (meth)acrylic monomers. The latter encompasses (meth)acrylate monomers. Generally a poly vinyl acetate (meth)acrylic will comprise at least 10 wt% repeat units derived from vinyl acetate monomers, based on the dry weight of the polymer. Generally a poly vinyl acetate (meth)acrylic will comprise less than 50 wt% repeat units derived from (meth)acrylic monomers, based on the dry weight of the polymer, e.g. a poly vinyl acetate (meth)acrylic may comprise 10-40 wt% repeat units derived from (meth)acrylic monomers.

As used herein, the term "alkyd" refers to an alkyd resin, or mixture of alkyd resins. The alkyd is derived from at least a polycarboxylic acid and/or anhydride, a polyol, and an unsaturated fatty acid or oil.

As used herein, the term "alkyd modified poly(meth)acrylic" refers to a poly(meth)acrylic that has been modified by at least one alkyd.

As used herein the term "fatty acid modified polyurethane" refers to a polyurethane that has been modified by at least one fatty acid.

As used herein the term "urethane modified alkyd" refers to an alkyd that has been modified by at least one urethane. This term encompasses polyurethane modified alkyds.

As used herein, the term "styrene monomer" refers to styrene, and derivatives thereof that retain the vinyl benzene core, e.g. alpha-methyl styrene and 4-vinyl toluene.

As used herein, the term "biocide" refers to compounds that act to prevent biological growth, e.g. growth of bacteria, yeast, mould and/or algae. Biocides are also referred to as preservatives, in can biocides, (dry) film biocides, antimicrobial agents, biologically active compounds, (dry) film preservatives, in can preservatives, wet state preservatives, wet state biocides and toxicants. Biocides can also be named according to the target microorganism e.g. fungicide, mildewicide, algicide, algaecide and bactericide.

As used herein, the term "wet state preservative" refers to compounds that are used for the preservation of coating compositions by the control of microbial deterioration in order to protect the composition in the wet state i.e. during production and storage.

As used herein, the term "dry film preservative" refers to compounds that are used for the preservation of films or coatings by the control of microbial deterioration in order to protect the initial properties of coatings and films formed from the compositions in which they are present.

As used herein, the term "volatile organic compound (VOC)" refers to organic compounds having a boiling point $\leq$ 250°C at 101.3 kPa. This is the definition given in EU Directive 2004/42/CE.

As used herein, the term "Semi Volatile Organic Compounds, SVOC (g/L)", are compounds having a boiling point higher than 250°C and $<$400°C at 101.3 kPa.

As used herein, the term "colour pigment" is a pigment that is added to a composition to give colour. Colour pigments include white pigments, such as $TiO_2$.

As used herein, the term "particle size" when used in relation to polymer dispersions refer to the Z-average diameter size as determined by ISO 22412:2017 using a Malvern Zetasizer Nano S instrument.

As used herein, the term "average diameter" refers to the Z-average diameter as determined by ISO 22412:2017 using a Malvern Zetasizer Nano S instrument.

As used herein, the term "molecular weight" refers to weight average molecular weight (Mw), unless otherwise

specified. It is determined by Gel Permeation Chromatography.

As used herein, the term "MFFT" refers to "minimal film formation temperature" as determined by ASTM D2354-10e1.

As used herein, the term "weight % (wt%)", when used in relation to individual constituents of the composition, refers to the actual weight of constituent, i.e. without volatile components present, unless otherwise specified.

As used herein, the term "weight % (wt%)", when used in relation to the composition, refers to an ingredient weight (solids) relative to the total weight of the composition, i.e. including non-volatile and volatile components, unless otherwise specified.

As used herein, the term "automatic production line" refers to a production line that operates without any human intervention, e.g. in relation to decision criteria, and sub-process relationships.

As used herein, the term "semi-automatic production line" refers to a production line that partially operates without any human intervention. In a typical semi-automatic production line, some of the steps carried out are automated and at least one step requires some form of human intervention.

DETAILED DESCRIPTION OF THE INVENTION

The present invention provides a method of preparing a coating composition for storage in a container for at least 28 days, preferably at 15-40 °C, comprising:

(i) providing said composition;
(ii) heating said composition to a treatment temperature of greater than 70 °C by ohmic heating;
(iii) holding said composition at said treatment temperature for at least 1 second; and
(iv) cooling said composition;

wherein said composition comprises a binder, water and optionally biocide.

The method of the invention is highly advantageous because it achieves uniform and consistent heating of the composition throughout its entire volume. Thus in a preferred method of the present invention, said ohmic heating achieves uniform heating of said coating composition. In particularly preferred methods of the present invention, during said holding step (iii), said coating composition has a temperature variation of less than ±4 °C, more preferably less than ±2 °C, and still more preferably less than ±1 °C, throughout its volume. This can, for example, be determined by measuring the temperature of the coating composition at different locations during the holding step.

The uniform heating occurs as a consequence of the heating mechanism *per* se. In the ohmic heating process an alternating electric current is passed through a composition, and the resistance of the composition *per se* generates heat. Ohmic heating is superior in its efficiency as nearly all the energy entered is transformed into heat. The composition treated is heated rapidly with a minimal temperature gradient resulting in a uniform heating. In contrast heat transfer tends to cause heating from the outside inwards resulting in significant temperature gradients in the composition and lengthy time lags to achieve the target temperature in the middle of the composition, and microwave heating tends to result in hot spots and non-uniform heating. In addition, heat transfer and microwave heating are less efficient.

A further benefit of the method of the invention is that relatively high volumes of composition may be treated, and moreover, be treated quickly, e.g. such that it accommodates integration into an automatic or semi-automatic production line. Thus in a preferred method of the present invention, said ohmic heating is carried out in a pipe or a duct. Particularly preferably said coating composition continuously flows through said pipe or duct during said ohmic heating, which facilitates the integration of the method into Semi-automated or automated production lines. In preferred methods of the invention, the flow rate of said coating composition through said pipe or duct is 200-100,000 Uh, more preferably 1000-50,000 L/h and still more preferably 2000-20,000 Uh. In further preferred methods of the present invention, the volume of said coating composition prepared per hour is 200-100,000 L, preferably 1000-50,000 L, more preferably 2000-20,000 L. This means that the volume per hour of the composition that undergoes the (ii) heating, (iii) holding and (iii) cooling steps of the method defined herein is preferably 200-100,000 L, preferably 1000-50,000 L, more preferably 2000-20,000 L.

The rapid treatment of relatively high volumes of coating composition is feasible due to the different mechanism by which ohmic heating achieves heating, compared to direct heating or microwave radiation. In ohmic heating there is very little energy lost as the electrons move between the electrodes of the ohmic heater, hence heating occurs rapidly in the composition. In contrast, in microwave heating, energy dissipates when it collides with non-polar molecules. The only way to compensate for this loss of efficiency in microwave heating is to reduce the diameter of the pipe in which the composition is radiated but this reduces the volume of the composition that can be treated at any given time, i.e. decreases capacity (L/h). With direct heating, in particular with commercial sized containers, the lag time for the compositions per se to achieve high temperatures may be in the order of hours making it non-viable in a continuous, semi-automatic or automatic commercial production facility.

The method of the present invention thus achieves fast and uniform heating of the entire volume of composition to be treated, allowing for relatively high volumes of composition to be treated per unit of time. The method of the present invention may be carried out batch wise or continuously. Preferably, however, the method is carried out continuously.

The method also achieves highly effective killing of microbial species. Despite the high speed of the method of the present invention, it surprisingly results in the preparation of a composition that can be stored in a container for at least 28 days, without employing any special conditions, e.g. air-conditioning or climate control, and the stored composition is substantially identical to the composition immediately prior to storage. For example the composition may be stored at temperatures of 15-40 °C, without any humidity control. This is achieved by effectively killing all of the microbes throughout the entire volume of composition.

*Conditions of ohmic heating*

In a preferred method of the present invention, said coating composition is heated to a treatment temperature of >70 to 90 °C, more preferably 73-85 °C, and still more preferably 74-80 °C by ohmic heating. These temperatures have been found to be sufficient to achieve killing of microorganisms. Without being bound by theory, it is thought that the fact that uniform heating is achieved throughout the entire composition is critical to achieving killing of microorganisms at these temperatures, i.e. it avoids the possibility that microorganisms survive the treatment by being located in a cold or colder spot, e.g. in the middle of the composition if direct heating is used.

In a preferred method of the present invention, said ohmic heating of said coating composition achieves the treatment temperature in 1-300 seconds, preferably 5-150 seconds and more preferably 10-90 seconds. This means that the time between the coating composition being at ambient temperature to the treatment temperature is the above-recited periods of time. The short time period to achieving the treatment temperature is highly beneficial and underpins the ability of the method of the invention to treat relatively large volumes of composition per unit time.

In a preferred method of the present invention, said coating composition is held at the treatment temperature for 1 second to 15 minutes, preferably 1 second to 5 minutes, more preferably 2 seconds to 2 minutes, and still more preferably 5 seconds to 1 minute. This means that the coating composition is maintained at the treatment temperature for the recited times. The coating composition may be stationary or flowing during this step. Optionally the coating composition is held at the treatment temperature within one or more pipes, ducts or holding tubes, which are connected to the pipe or duct in which the ohmic heating occurs. Preferably the coating composition is pumped through one or more pipes, ducts or holding tubes during this step. This enables the process to be carried out continuously. The relatively short time period for which the coating composition has to be held at the treatment temperature contributes to the ability of the method to treat large volumes of composition per unit time, including in an automated or semi-automated production line.

In a preferred method of the present invention, said coating composition is cooled to below 70 °C, preferably to 20-65 °C and still more preferably to 40-60 °C after step (iii). This may occur passively (i.e. without active cooling), or may be carried out actively, preferably by conventional methods, e.g. in cooling tubes, heat exchangers etc. In preferred methods of the invention, sufficient cooling is achieved passively. This is typically the case when the treatment temperature is around 75 °C since the composition will cool passively to a temperature of less than 60 °C, when heating is stopped and insulation is no longer provided, e.g. during transportation to a filling tank and/or to containers, in an acceptable period of time.

In a preferred method of the present invention, said method is carried out at atmospheric pressure, or under an internal pressure of up to 10 bar. Preferably the only pressure applied is that required to make the composition flow through the equipment used in the method.

A particularly preferred method of the invention comprises:

(i) providing said composition;
(ii) heating said composition to a treatment temperature of 74-80 °C by ohmic heating;
(iii) holding said composition at said treatment temperature for 5 seconds to 1 minute; and
(iv) cooling said composition;

wherein said composition comprises an organic binder, water and optionally biocide.

A still further preferred method of the invention comprises:

(i) providing said composition;
(ii) heating said composition to a treatment temperature of 74-80 °C by ohmic heating;
(iii) holding said composition at said treatment temperature for 5 seconds to 1 minute; and
(iv) passively cooling said composition;

wherein said composition comprises an organic binder, water and optionally biocide.

Another still further preferred method of the invention comprises:

(i) providing said composition;
(ii) heating said composition to a treatment temperature of 74-80 °C by ohmic heating;
(iii) holding said composition at said treatment temperature for 5 seconds to 1 minute; and
(iv) actively cooling said composition;

wherein said composition comprises an organic binder, water and optionally biocide.

An especially preferred method of the invention comprises:

(i) providing said composition;
(ii) heating said composition to a treatment temperature of 74-80 °C by ohmic heating;
(iii) holding said composition at said treatment temperature for 5 seconds to 1 minute; and
(iv) passively cooling said composition;

wherein said method is integrated into a semi-automated or automated production line, and said composition comprises an organic binder, water and optionally biocide.

Another especially preferred method of the invention comprises:

(i) providing said composition;
(ii) heating said composition to a treatment temperature of 74-80 °C by ohmic heating;
(iii) holding said composition at said treatment temperature for 5 seconds to 1 minute; and
(iv) actively cooling said composition;

wherein said method is integrated into a semi-automated or automated production line, and said composition comprises an organic binder, water and optionally biocide.

A preferred method of the present invention further comprises a step (v), wherein said coating composition is filled into containers after cooling in step (iv). Preferably step (v) is carried out directly after step (iv), i.e. the method of the invention occurs immediately prior to filling said coating composition into containers.

Optionally the coating composition may undergo further cooling in said containers. Thus initial cooling may occur passively during transportation to the containers, and further cooling occur within the containers. Optionally the containers may be separately sterilised.

The method of the present invention provides a coating composition with excellent microbiological quality for storage in a container. Thus the method of the invention effectively kills the microorganisms that are introduced into the composition from the raw ingredients used in its manufacture, from the manufacturing equipment and during transfers. Generally these are unavoidable, particularly in semi-automated and automated production lines. The amount of microorganisms present in the coating composition following the method of the invention is preferably <1000 cfu/g, and more preferably <100 cfu/g.

Preferably the method of the invention is operated within a semi-automatic or automatic production line.

*Composition*

In the method of the present invention, the coating composition is preferably a paint, primer, varnish, stain or lacquer, and more preferably a paint.

The coating composition comprises a binder, water and optionally biocide.

Binder

The coating composition of the present invention comprises a binder. The binder may be organic or inorganic. Examples of suitable inorganic binders include silicate, slaked lime, and water glass. However, organic binders are preferred.

In a preferred coating composition of the present invention the organic binder is a composition comprising polymer particles and/or droplets dispersed in water. Preferably the polymer particles and/or droplets have an average diameter of 40-600 nm, more preferably 50-500 nm and still more preferably 50-400 nm, preferably as determined by ISO 22412:2017. The polymer particles and/or droplets constitute the film forming polymer present in the composition and coalesce after application and during drying.

In another preferred coating composition of the present invention, the organic binder has a minimal film formation temperature (MFFT) of less than 50 °C, preferably less than 30 °C and still more preferably less than 20 °C. The MFFT may

be 5 °C or less. This is advantageous as a low MFFT makes it possible to reduce the amount of coalescent needed and thereby reduce the VOC and/or SVOC of the composition. MFFT is preferably determined by ASTMD2354-10e1.

In a preferred coating composition of the present invention the organic binder is a polymer dispersion comprising 30-70 wt% and more preferably 35-60 wt% polymer particles and/or droplets, based on the weight of the dispersion. The dispersion may optionally comprise other conventional additives such as dispersing agents, wet state preservatives and foam control agents.

In a preferred coating composition of the present invention the organic binder is selected form poly (meth)acrylic, poly styrene (meth)acrylic, poly(ethylene-vinyl acetate), poly vinyl acetate (meth)acrylic, alkyd, polyester, polyurethane, fatty acid modified polyurethane, (meth)acrylic modified polyurethane, urethane modified alkyd, (meth)acrylic modified alkyd, alkyd modified poly (meth)acrylic, polycarbonate and combinations thereof. More preferably the organic binder is selected form poly (meth)acrylic, poly styrene (meth)acrylic, poly(ethylene-vinyl acetate), poly vinyl acetate (meth)acrylic, alkyd, fatty acid modified polyurethane, urethane modified alkyd and combinations thereof.

In a preferred coating composition of the present invention, the organic binder has a weight average molecular weight of 3,000-3,000,000, preferably 4,000-2,500,000 and more preferably 4,000-2,000,000 g/mol.

A preferred coating composition of the present invention comprises 1-70 wt%, preferably 2-60 wt% and more preferably 3-35 wt% binder (solids), based on the total weight of the composition.

A preferred coating composition of the present invention comprises 2-80 wt%, preferably 4-70 wt% and more preferably 6-70 wt% polymer dispersion, based on the total weight of the composition.

*Poly (meth)acrylic and poly styrene (meth)acrylic*

One preferred coating composition of the present invention comprises an organic binder selected from poly (meth)acrylic, poly styrene (meth)acrylic and combinations thereof. These organic binders both comprise repeat units derived from (meth)acrylic monomers. However, poly (meth)acrylic binder comprises less than 10 wt% repeat units derived from styrene monomers, based on the dry weight of the polymer, whereas poly styrene (meth)acrylic comprises at least 10 wt% repeat units derived from styrene, based on the dry weight of the polymer.

Preferably the poly (meth)acrylic or poly styrene (meth)acrylic comprises a residue of at least one monomer of formula (I):

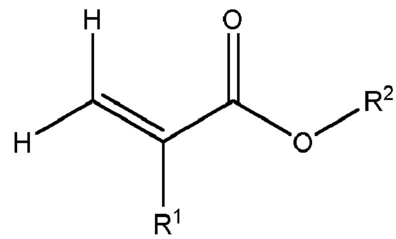

(I)

$R^1$ is H or $CH_3$; and

$R^2$ is H or $C_{1-18}$ alkyl, preferably $C_{1-10}$ alkyl and more preferably $C_{1-8}$ alkyl.

Preferably the poly (meth)acrylic and poly styrene (meth)acrylic comprises a residue of at least one monomer selected from methyl (meth)acrylate, ethyl (meth)acrylate, propyl (meth)acrylate, butyl (meth)acrylate, hexyl (meth) acrylate, 2-ethylhexyl (meth)acrylate, octyl (meth)acrylate, isooctyl (meth)acrylate, n-decyl (meth)acrylate, isodecyl (meth)acrylate, tert-butyl (meth)acrylate, (meth)acrylic acid and 2-hydroxyethyl (meth)acrylate.

In poly (meth)acrylics and poly styrene (meth)acrylics present in the coating compositions of the present invention, the poly (meth)acrylic and poly styrene (meth)acrylic comprises 1, 2, 3, 4 or 5 different residues of (meth) acrylate monomers of formula (I). In preferred compositions, the poly (meth)acrylic comprises residue(s) of 2, 3, 4 or 5 monomers of formula (I).

One preferred coating composition of the present invention comprises poly (meth)acrylic. Preferably the poly (meth)acrylic comprises at least 60 wt%, more preferably at least 70 wt%, still more preferably at least 85 wt% and yet more preferably at least 95 wt% repeat units derived from (meth)acrylic monomers, e.g. repeat units derived from monomers of formula (I), based on the dry weight of the polymer. Optionally the poly (meth)acrylic comprises 100 wt% repeat units derived from (meth)acrylic monomers, e.g. repeat units derived from monomers of formula (I), based on the dry weight of the polymer.

Preferred poly (meth)acrylic comprises 50-100 wt%, more preferably 60-100 wt%, still more preferably 75-100 wt% and yet more preferably 90-100 wt% repeat units derived from (meth)acrylic monomers, e.g. repeat units derived from monomers of formula (I), based on the dry weight of the polymer. Other monomer types that may be present in poly (meth)

acrylics include acrylamide, vinyl (such as vinyl esters of versatic acids and mixtures thereof), butadiene, styrene and combinations thereof. Preferably the poly (meth)acrylic comprises 0-50 wt%, more preferably 0-40 wt%, still more preferably 0-25 wt% and yet more preferably 0-10 wt% monomers other than (meth)acrylic monomers, e.g. repeat units derived from monomers of formula (I), based on the dry weight of the polymer.

Preferred poly (meth)acrylic comprises less than 10 wt% repeat units derived from styrene monomers selected from styrene, $\alpha$-methyl styrene, 4-vinyl toluene, and combinations thereof, based on the dry weight of the polymer. Preferred poly (meth)acrylic comprises less than 10 wt% repeat units derived from vinyl acetate monomer, based on the dry weight of the polymer.

Another preferred coating composition of the present invention comprises poly styrene (meth)acrylic. Preferred poly styrene (meth)acrylic comprises at least 10 wt%, more preferably at least 15 wt%, still more preferably at least 20 wt% and yet more preferably at least 30 wt% repeat units derived from styrene monomers selected from styrene, $\alpha$-methyl styrene, 4-vinyl toluene, and combinations thereof, based on the dry weight of the polymer. Preferred poly styrene (meth) acrylic comprises 10-60 wt%, more preferably 15-55 wt%, still more preferably 20-50 wt% and yet more preferably 30-45 wt% repeat units derived from styrene monomers, based on the dry weight of the polymer.

Preferred poly styrene (meth)acrylic comprises 40-90 wt%, more preferably 45-85 wt%, still more preferably 50-80 wt% and yet more preferably 55-70 wt% repeat units derived from (meth)acrylic monomers, e.g. repeat units derived from monomers of formula (I), based on the dry weight of the polymer.

A particularly preferred poly styrene (meth)acrylic comprises 10-60 wt%, more preferably 15-55 wt%, still more preferably 20-50 wt% and yet more preferably 30-45 wt% repeat units derived from styrene monomers and 40-90 wt%, more preferably 45-85 wt%, still more preferably 50-80 wt% and yet more preferably 55-70 wt% repeat units derived from (meth)acrylic monomers, e.g. repeat units derived from monomers of formula (I), based on the dry weight of the polymer.

Optionally poly styrene meth(acrylic) comprises 0-30 wt%, more preferably 0-20 wt% and preferably 0-10 wt% of repeat units derived from other monomers such as acrylamide, vinyl monomers (such as vinyl esters of versatic acids and mixtures thereof) and/or butadiene.

*Poly(ethylene-vinyl acetate)*

Another preferred coating composition of the present invention comprises the organic binder poly(ethylene-vinyl acetate). This binder comprises repeat units derived from ethylene and vinyl acetate.

Preferably the poly(ethylene-vinyl acetate) comprises at least 10 wt%, preferably at least 15 wt%, and more preferably at least 20 wt% repeat units derived from vinyl acetate, based on the dry weight of the polymer. Preferably the poly(ethylene-vinyl acetate) comprises 10-55 wt%, more preferably 10-50 wt% and still more preferably 10-40 wt% repeat units derived from vinyl acetate, based on the dry weight of the polymer.

Preferably the poly(ethylene-vinyl acetate) comprises at least 40 wt%, preferably at least 45 wt%, more preferably at least 50 wt% and still more preferably at least 60 wt% repeat units derived from ethylene, based on the dry weight of the polymer. Preferably the poly(ethylene-vinyl acetate) comprises 45-90 wt%, more preferably 50-90 wt% and still more preferably 60-90 wt% repeat units derived from ethylene, based on the dry weight of the polymer.

A particularly preferred poly(ethylene-vinyl acetate) comprises 10-55 wt%, more preferably 10-50 wt% and still more preferably 10-40 wt% repeat units derived from vinyl acetate and 45-90 wt%, more preferably 50-90 wt% and still more preferably 60-90 wt% repeat units derived from ethylene, based on the dry weight of the polymer

Preferably the poly(ethylene-vinyl acetate) comprises less than 10 wt% and more preferably less than 5 wt% repeat units derived from monomers, other than ethylene or vinyl acetate.

*Poly vinyl acetate (meth)acrylic*

Another preferred coating composition of the present invention comprises the organic binder poly vinyl acetate (meth)acrylic. This binder comprises repeat units derived from vinyl acetate and (meth)acrylic monomers. Preferably the poly vinyl acetate (meth)acrylic comprises at least 10 wt%, preferably at least 20 wt%, and more preferably at least 30 wt% repeat units derived from vinyl acetate, based on the dry weight of the polymer. Preferably the poly vinyl acetate (meth) acrylic comprises 10-90 wt%, more preferably 20-80 wt% and still more preferably 30-70 wt% repeat units derived from vinyl acetate, based on the dry weight of the polymer.

Preferably the poly vinyl acetate (meth)acrylic comprises at least 10 wt%, preferably at least 20 wt% and more preferably at least 30 wt% repeat units derived from (meth)acrylic monomers, e.g. repeat units derived from monomers of formula (I), based on the dry weight of the polymer. Preferably the poly vinyl acetate (meth)acrylic comprises 10-90 wt%, more preferably 20-80 wt% and still more preferably 30-70 wt% repeat units derived from (meth)acrylic monomers, e.g. repeat units derived from monomers of formula (I), based on the dry weight of the polymer.

A particularly preferred poly vinyl acetate (meth)acrylic comprises 10-90 wt%, more preferably 20-80 wt% and still more preferably 30-70 wt% repeat units derived from vinyl acetate, and 10-90 wt%, more preferably 20-80 wt% and still

more preferably 30-70 wt% repeat units derived from (meth)acrylic monomers, e.g. repeat units derived from monomers of formula (I), based on the dry weight of the polymer.

It will be appreciated that when vinyl acetate monomer is incorporated into organic binder present in the coating compositions of the present invention that it will start to hydrolyse to vinyl alcohol during production and continue during storage. The above-recited contents of repeat units derived from vinyl acetate therefore refer to the corresponding amount of monomer that is incorporated into the polymer during manufacture. It will be appreciated that the actual wt% of repeat units derived from vinyl acetate monomer in the polymer actually present in the coating composition will be the sum of the wt% of repeat units derived from vinyl acetate, and its hydrolysed form, vinyl alcohol.

*Fatty acid modified polyurethane*

Another preferred coating composition of the present invention comprises the organic binder fatty acid modified polyurethane.

Polyurethanes are obtained by the reaction of polyfunctional polyols and polyfunctional isocyanates. The latter are synthesized by oligomerization of monomeric diisocyanates. Commonly used isocyanates include hexamethylene diisocyanate (HDI), isophorone diisocyanate (IPDI), bis-(4-isocyanatcyclohexyl)methane ($H_{12}MDI$), 2,4- and 2,6-toluene diisocyanate (TDI), diphenylmethane 4,4- and/or 2,4-diisocyanate (MDI). Other examples include xylene diisocyanate (XDI), hydrogenated xylylene diisocyanate (H6XDI), 2,2,4-and 2,4,4-trimethyl-1,6-diisocyanateohexane (TMDI), tetramethylxylene diisocyanate (TMXDI), 1,5-pentamethylene diisocyanate, triphenylmethane-4,4',4"-triisocyanate and tris(p-isocyanatophenyl)thiophosphate. Commonly used polyols have two or more hydroxyl groups per molecule. Suitable polyols include 1,6-hexane diol, neopentyl glycol, butane diol, ethylene glycol, glycerol, polyacrylate polyols, polyester polyols, polyether polyols, polycarbonate polyols or polycaprolactone polyols. Polyester polyols are preferably derived by polycondensation of multifunctional carboxylic acids and polyhydroxyl compounds. Amine functional compounds may be used as chain extenders.

Chemical composition and processing of polyurethanes and polyurethane dispersions are described in Polyurethanes. Coatings, Adhesives and Sealants by Meier, Vesthues, Danielmeier, Kruppa and Squiller, 2nd revised edition, Vincentz Network, 2019. The process of making waterborne polyurethane may involve a step of partial or full neutralization of carboxylic groups present with amines (e.g. diethanolamine, aminomethylpropanol, dimethylethanolamine, triethylamine, morpholine). Surfactants may also be used.

Fatty acid modified polyurethanes preferably comprise unsaturated fatty acids or fatty alcohols within the polyurethane polymer structure. The presence of such fatty acids in the polymer structure allows for room temperature curing by enabling crosslinking with oxygen in the air atmosphere.

The unsaturated fatty acid present in the modified polyurethanes of the present invention is preferably a $C_{8-24}$, more preferably $C_{12-24}$ and still more preferably a $C_{14-24}$ unsaturated fatty acid. The unsaturated fatty acid preferably comprises 1, 2 or 3 double bonds. When multiple double bonds are present, they may be conjugated or non-conjugated. The double bonds may have cis or trans geometry.

Examples of suitable unsaturated fatty acids present in the modified polyurethanes of the present invention include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soybean fatty acid, tall oil fatty acid, or mixtures thereof. Preferably the unsaturated fatty acid is selected from linolenic, linoleic and oleic acids, soybean fatty acid, tall oil fatty acid, and mixtures thereof.

Preferably a mixture of fatty acids is present in the fatty acid modified polyurethane. Preferably the fatty acid is derived from natural or synthetic oils and thus the mixture of fatty acids present in the polyurethane reflects the mixture present in the oil. Saturated fatty acids and oils may optionally be present, e.g. butyric acid, lauric acid, myristic acid, palmitic acid or stearic acid. Examples of suitable oils for providing fatty acid groups in polyurethane include linseed oil, soybean oil, rapeseed oil, sunflower oil, palm oil, tung oil, calendula oil, wood oil (e.g. pine oil), safflower oil, tuna fish oil, and combinations thereof. Preferably the oil is selected from wood oil, rapeseed oil, linseed oil, sunflower oil and soybean oil.

Modification of polyurethane with fatty acids may be carried out by conventional methods.

*Alkyd*

Another preferred coating composition of the present invention comprises the organic binder alkyd.

The alkyd is preferably derived from at least a polycarboxylic acid and/or anhydride, a polyol and an unsaturated fatty acid or oil. Typically, the unsaturated fatty acid or oil is a vegetable oil and/or fatty acids present in vegetable oil. The alkyd may further comprise one or more monoacids.

The polycarboxylic acid could be a triacid or a diacid. The polycarboxylic acid could be an alkyl polycarboxylic acid or an aromatic polycarboxylic acid. Alkyl polycarboxylic acids include acyclic and cyclic polycarboxylic acids. Typical

polycarboxylic acids are C3-12 polycarboxylic acids and more specifically C4-10 polycarboxylic acids. The anhydride could typically be a C4-10 cyclic anhydride.

Representative examples of suitable polycarboxylic acids include o-phthalic acid, isophthalic acid, adipic acid, succinic acid, terephthalic acid, 1,4-cyclohexanedicarboxylic acid, hexahydrophthalic acid, citric acid, fumaric acid, mesaconic acid, maleic acid, citraconic acid, 5-tert-butyl isophthalic acid, trimellitic acid, pyromellitic acid, 2,2,4- trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2- dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclo-hexane-1,2,4,5-tetracarboxylic acid, butane-1,2,3,4-tetracarboxylic acid, 1,2-cyclohexanedicarboxylic acid, 1,3-cyclohexanedicarboxylic acid, furandicarboxylic acids, tetrahydrofurandicarboxylic acids, itaconic acid, citraconic acid and dimer fatty acid.

Representative examples of suitable anhydrides include o-phthalic anhydride, succinic anhydride, hexahydrophthalic anhydride, maleic anhydride, trimellitic anhydride, pyromellitic anhydride, cyclopentane-1,2-dicarboxylic anhydride, cyclohexane-1,2-dicarboxylic anhydride, 4-methylcyclohexane-1,2-dicarboxylic anhydride, tetrahydrophthalic anhydride, endomethylene-cyclohexane-1,2-dicarboxylic anhydride, endoisopropylidene-cyclohexane-1,2-dicarboxylic anhydride, 1,2-cyclohexanedicarboxylic anhydride, itaconic anhydride and lactide.

Representative examples of monoacids are acetic acid, abietic acid, benzoic acid, cinnamic acid, crotonic acid, dehydroabietic acid, levopimaric acid, neoabietic acid, para-tert-butylbenzoic acid or tiglic acid.

The polyol present in the alkyd preferably comprises 2-6 hydroxyl groups. More specifically the polyol could be a diol, triol or tetrol. The polyol is typically an aromatic polyol, an alkyl polyol or a cycloalkyl polyol, e.g. alkyl polyols and cycloalkyl polyols. Typically, alkyl polyols are C2-12 polyols or C3-10 polyols.

Representative examples of suitable polyols include alkylene glycols, poly(alkylene) glycols, polycarbonate polyols, dihydroxyalkyl-1,3-dioxanes, di(hydroxyalkyl)furans, di(hydroxyalkyl)tetrahydrofurans, 2-alkyl-1,3-propanediols, 2,2-dialkyl-1,3-propanediols, 2-hydroxyalkyl-1,3-propanediols, 2,2-dihydroxyalkyl-1,3-propanediols, 2-alkyl-2-hydroxyalkyl-1,3-propanediols, ethylene glycol, propylene glycol, 1,3-propanediol, 1,4-butylene glycol, 1,3-butylene glycol, neopentyl glycol, 2-butyl-2-ethyl-1,3-propanediol, 1,6-hexane diol, 1,12-dodecane diol, 3-methyl-1,5-pentane diol, 2,2,4-trimethyl-1,6-hexane diol, 2,2-dimethyl-1,3-propane diol, 2-methyl-2-cyclohexyl-1,3-propane diol, 1,4-cyclohexane dimethanol, glycerol, trimethylol ethane, trimethylol propane, pentaerythritol, sorbitol 5,5-dihydroxymethyl-1,3-dioxane, di(hydroxymethyl)furan, di(hydroxymethyl) tetrahydrofuran, spiroglycol (2,4,8,10-tetraoxaspiro[5.5]undecane-3,9-diethanol), isosorbide, isomannide, isoidide, di-glycerol, trimethylolbutane, di-trimethylolethane, di-trimethylolpropane, di-trimethylolbutane, di-pentaerythritol, tri-pentaerythritol, anhydroennea-heptitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether.

The unsaturated fatty acid or oil (unsaturated triglyceride) present in the alkyd is typically a $C_{8-24}$, more typically a $C_{12-24}$ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soybean fatty acid, tall oil fatty acid, or mixtures thereof. Preferably the unsaturated fatty acid is selected from linolenic, linoleic and oleic acids, soybean fatty acid, tall oil fatty acid, and mixtures thereof.

Typically, a mixture of fatty acids will be present in the alkyd. Typically, the fatty acid is derived from natural or synthetic oils and thus the mixture of fatty acids present in the alkyd reflects the mixture present in the oil. Saturated fatty acids and oils may optionally be present. Examples of suitable oils for providing fatty acid groups in alkyd include linseed oil, soybean oil, rapeseed oil, sunflower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

Chemical composition and processing of alkyds is described in Polyester and Alkyd Resin: Technical Basics and Applications by Ulrich Poth, Vincentz Network, 2020. The process of making waterborne alkyds may involve a step of partial or full neutralization of free carboxylic groups with amines as is (e.g. diethanolamine, aminomethylpropanol, dimethylethanolamine, triethylamine, morpholine) or in the form of salts to form anions. Surfactants may also be used.

*Urethane modified alkyd*

Another preferred coating composition of the present invention comprises the organic binder urethane modified alkyd.

The alkyd of the urethane modified alkyd is preferably derived from at least a polycarboxylic acid and/or anhydride, a polyol and an unsaturated fatty acid or oil. Typically, the unsaturated fatty acid or oil is a vegetable oil and/or fatty acids present in vegetable oil. The alkyd may further comprise one or more monoacids. The alkyd is modified by isocyanate, preferable an aliphatic isocyanate and/or cycloaliphatic isocyanate, to urethane modified alkyd. Typically, the isocyanate substitutes some of the commonly used polycarboxylic acid and/or anhydride present in an unmodified alkyd.

The polycarboxylic acid could be a triacid or a diacid. The polycarboxylic acid could be an alkyl polycarboxylic acid or an aromatic polycarboxylic acid. Alkyl polycarboxylic acids include acyclic and cyclic polycarboxylic acids. Typical polycarboxylic acids are C3-12 polycarboxylic acids and more specifically C4-10 polycarboxylic acids. The anhydride could typically be a C4-10 cyclic anhydride.

Representative examples of suitable polycarboxylic acids include o-phthalic acid, isophthalic acid, adipic acid, succinic acid, terephthalic acid, 1,4-cyclohexanedicarboxylic acid, hexahydrophthalic acid, citric acid, fumaric acid, mesaconic acid, maleic acid, citraconic acid, 5-tert-butyl isophthalic acid, trimellitic acid, pyromellitic acid, 2,2,4- trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2- dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclo-hexane-1,2,4,5-tetracarboxylic acid, butane-1,2,3,4-tetracarboxylic acid, 1,2-cyclohexanedicarboxylic acid, 1,3-cyclohexanedicarboxylic acid, furandicarboxylic acids, tetrahydrofurandicarboxylic acids, itaconic acid, citraconic acid and dimer fatty acid.

Representative examples of suitable anhydrides include o-phthalic anhydride, succinic anhydride, hexahydrophthalic anhydride, maleic anhydride, trimellitic anhydride, pyromellitic anhydride, cyclopentane-1,2-dicarboxylic anhydride, cyclohexane-1,2-dicarboxylic anhydride, 4-methylcyclohexane-1,2-dicarboxylic anhydride, tetrahydrophthalic anhydride, endomethylene-cyclohexane-1,2-dicarboxylic anhydride, endoisopropylidene-cyclohexane-1,2-dicarboxylic anhydride, 1,2-cyclohexanedicarboxylic anhydride, itaconic anhydride and lactide.

Representative examples of monoacids are acetic acid, abietic acid, benzoic acid, cinnamic acid, crotonic acid, dehydroabietic acid, levopimaric acid, neoabietic acid, para-tert-butylbenzoic acid or tiglic acid.

The polyol present in the alkyd preferably comprises 2-6 hydroxyl groups. More specifically the polyol could be a diol, triol or tetrol. The polyol is typically an aromatic polyol, an alkyl polyol or a cycloalkyl polyol, e.g. alkyl polyols and cycloalkyl polyols. Typically, alkyl polyols are C2-12 polyols or C3-10 polyols.

Representative examples of suitable polyols include alkylene glycols, poly(alkylene) glycols, polycarbonate polyols, dihydroxyalkyl-1,3-dioxanes, di(hydroxyalkyl)furans, di(hydroxyalkyl)tetrahydrofurans, 2-alkyl-1,3-propanediols, 2,2-dialkyl-1,3-propanediols, 2-hydroxyalkyl-1,3-propanediols, 2,2-dihydroxyalkyl-1,3-propanediols, 2-alkyl-2-hydroxyalkyl-1,3-propanediols, ethylene glycol, propylene glycol, 1,3-propanediol, 1,4-butylene glycol, 1,3-butylene glycol, neopentyl glycol, 2-butyl-2-ethyl-1,3-propanediol, 1,6-hexane diol, 1,12-dodecane diol, 3-methyl-1,5-pentane diol, 2,2,4-trimethyl-1,6-hexane diol, 2,2-dimethyl-1,3-propane diol, 2-methyl-2-cyclohexyl-1,3-propane diol, 1,4-cyclohexane dimethanol, glycerol, trimethylol ethane, trimethylol propane, pentaerythritol, sorbitol 5,5-dihydroxymethyl-1,3-dioxane, di(hydroxymethyl)furan, di(hydroxymethyl) tetrahydrofuran, spiroglycol (2,4,8,10-tetraoxaspiro[5.5]undecane-3,9-diethanol), isosorbide, isomannide, isoidide, di-glycerol, trimethylolbutane, di-trimethylolethane, di-trimethylolpropane, di-trimethylolbutane, di-pentaerythritol, tri-pentaerythritol, anhydroennea-heptitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether.

The unsaturated fatty acid or oil (unsaturated triglyceride) present in the alkyd is typically a $C_{8-24}$, more typically a $C_{12-24}$ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soybean fatty acid, tall oil fatty acid, or mixtures thereof. Preferably the unsaturated fatty acid is selected from linolenic, linoleic and oleic acids, soybean fatty acid, tall oil fatty acid, and mixtures thereof.

Typically, a mixture of fatty acids will be present in the urethane modified alkyd. Typically, the fatty acid is derived from natural or synthetic oils and thus the mixture of fatty acids present in the alkyd reflects the mixture present in the oil. Saturated fatty acids and oils may optionally be present. Examples of suitable oils for providing fatty acid groups in alkyd include linseed oil, soybean oil, rapeseed oil, sunflower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

Chemical composition and processing of alkyds is described in Polyester and Alkyd Resin: Technical Basics and Applications by Ulrich Poth, Vincentz Network, 2020. The process of making waterborne alkyds may involve a step of partial or full neutralization of free carboxylic groups with amines as is (e.g. diethanolamine, aminomethylpropanol, dimethylethanolamine, triethylamine, morpholine) or in the form of salts to form anions. Surfactants may also be used.

Urethane modified alkyds are produced by reacting the alkyd with an isocyanate. A reaction take place between residual hydroxyl groups (-OH) present in the alkyds and -R=N=C=O groups present in the isocyanate to form urethane linkages. The resulting compounds are described as urethane modified alkyds, often shortened to urethane alkyd or polyurethane (modified) alkyd in the case of using a polyisocyanate.

Examples of suitable isocyanates used for production of urethane modified alkyds are hexamethylene diisocyanate (HDI), isophorone diisocyanate (IPDI), bis-(4-isocyanatcyclohexyl)methane (H12MDI), 2,4- and 2,6-toluene diisocyanate (TDI), diphenylmethane 4,4- and/or 2,4-diisocyanate (MDI). Other examples are xylene diisocyanate (XDI), hydrogenated xylylene diisocyanate (H6XDI), 2,2,4-and 2,4,4-trimethyl-1,6-diisocyanateohexane (TMDI), tetramethylxylene diisocyanate (TMXDI), 1,5-pentamethylene diisocyanate, triphenylmethane-4,4',4"-triisocyanate and tris(p-isocyanatophenyl)thiophosphate.

Modification of alkyd with urethane may be carried out by conventional methods.

*Water*

The coating composition of the present invention comprises water. The water present in the coating composition may derive from the binder, e.g. binder provided in the form of a dispersion that has an aqueous continuous phase, and/or other components present in the composition which are supplied in water, and water which is added to the overall mixture. Optionally, water may be added immediately prior to application. The water added to the overall mixture forming the composition is preferably desalinated water, recirculated water, deionised water, demineralised water or tap water.

A preferred coating composition of the present invention comprises 5 to 90 wt%, more preferably 10 to 70 wt%, and still more preferably 20 to 55 wt% water, based on the total weight of the composition. This represents the total amount of water present, i.e. the amount of water added as well as the water added via its presence in other ingredients such as organic binder.

A preferred coating composition of the present invention has a pH of ≤12.0, and preferably ≤11.0. A pH of ≤11.5 is preferred since the composition is then classed as non-corrosive. A preferred coating composition of the present invention has a pH of ≥7.0, and preferably ≥7.5.

A particularly preferred coating composition of the present invention has a pH of 7.0-12.0, preferably 7.5-12.0, and more preferably 7.5-11.0.

Biocide

The coating composition optionally, and preferably, comprises biocide.

Preferably the coating composition comprises wet state preservative.

Optionally the coating composition comprises dry film preservative.

*Wet state preservatives*

A preferred coating composition of the present invention comprises one or more wet state preservatives. At least two different types of such compositions exist. First, there are the coating compositions comprising wet state preservatives that derive from the raw materials used to make the composition. In these compositions, no wet state preservatives per se are added during manufacture of the composition itself. Second, there are the coating compositions comprising wet state preservatives that derive from the raw materials as well as wet state preservatives that are added during preparation of the composition itself.

Representative examples of suitable wet state preservatives that may be present in the coating composition include:

Isothiazolines: Reaction mass of 5-chloro-2-methyl-4-isothiazolin-3-one and 2-methyl-2H-isothiazol-3-one (3:1) (CIT/MIT); 5-chloro-2-methyl-4-isothiazolin-3-one (CIT); 2-Methyl-4-isotiazolin-3-one (MIT); 2-Methyl-1,2-Benzisothiazol-3(2H)-one (MBIT); 1,2-Benzisothiazolin-3-one (BIT); 2-Octyl-2H-isothiazol-3-one (OIT); 2-n-butyl - benzo[d]isothiazol-3-one (BBIT);
Amides/Ureas: Benzamide, 2,2'-dithiobis (DTBMA), 2,2-dibromo-2-cyanoacetamide (DBNPA);
Pyrithiones: Zinc pyrithione (ZnPT); Sodium pyrithione (NaPT);
Organohalogens: 2-Bromo-2-nitro-1,3-propanediol (Bronopol);
Carbamates: 3-iodo-2-propynylbutylcarbamate (IPBC);

Silver chemistry: Reaction mass of titanium dioxide and silver chloride; and
Formaldehyde donor/CH2O adducts: N,N-Methylenebismorpholine (MBM); (ethylenedioxy)dimethanol (EDDM); α, α', α''-trimethyl-1,3,5-triazine-1,3,5(2H,4H,6H)-triethanol (HPT); 3,3'-methylenebis[5-methyloxazolidine] (Oxazolidin/MBO); Sodium N-(hydroxymethyl)glycinate; Tetrahydro1,3,4,6tetrakis(hydroxymethyl)imidazo[4,5-d]imidazole-2,5(1H,3H)-dione (TMAD); Tetrakis(hydroxymethyl)phosphonium sulphate(2:1) (THPS); Methenamine 3-chloroallylochloride (CTAC); 2,2',2''-(hexahydro-1,3,5-triazine-1,3,5-triyl)triethanol (HHT); 1,3-bis(hydroxymethyl)-5,5-dimethylimidazolidine-2,4-dione (DMDMH); 7a-ethyldihydro-1H,3H,5H-oxazolo[3,4-c]oxazole (EDHO); cis-1-(3-chloroallyl)-3,5,7-triaza-1-azoniaadamantanechloride (cis CTAC); (benzyloxy)methanol.

Preferably the wet state preservatives present in the coating composition of the invention is selected from; Reaction mass of 5-chloro-2-methyl-4-isothiazolin-3-one and 2-methyl-2H-isothiazol-3-one (3:1) (CIT/MIT), 5-chloro-2-methyl-4-isothiazolin-3-one (CIT), 2-Methyl-4-isotiazolin-3-one (MIT), 2-Methyl-1,2-Benzisothiazol-3(2H)-one (MBIT), 1,2-Benzisothiazolin-3-one (BIT), 2-Octyl-2H-isothiazol-3-one (OIT), Benzamide, 2,2'-dithiobis (DTBMA), 2,2-dibromo-2-cyanoacetamide (DBNPA), zinc pyrithione (ZnPT), Sodium pyrithione (NaPT), 2-Bromo-2-nitro-1,3-propanediol (Bronopol), 3-iodo-2-propynylbutylcarbamate (IPBC) and combinations thereof.

If present, the wet state preservatives are preferably in the following amounts; 0.0001-0.004% (1-40 ppm) of reaction mass of 5-chloro-2-methyl-4-isothiazolin-3-one and 2-methyl-2H-isothiazol-3-one (3:1) (CIT/MIT), 0.0001-0.004% (1-40 ppm) of 5-chloro-2-methyl-4-isothiazolin-3-one (CIT), 0.0001-0.02% (1-200 ppm) of 2-Methyl-4-isotiazolin-3-one (MIT), 0.001-0.06% (10-600 ppm) of 2-Methyl-1,2-Benzisothiazol-3(2H)-one (MBIT), 0.001-0.06% (10-600 ppm) of 1,2-Benzisothiazolin-3-one (BIT), 0.001-0.1% (10-1000 ppm) of 2-Octyl-2H-isothiazol-3-one (OIT), 0.001-0.06% (10-600 ppm) of Benzamide, 2,2'-dithiobis (DTBMA), 0.0001-0.1% (1-1000 ppm) of 2,2-dibromo-2-cyanoacetamide (DBNPA), 0.001-0.06% (10-600 ppm) of zinc pyrithione (ZnPT), 0.001-0.06% (10-600 ppm) of Sodium pyrithione (NaPT), 0.0001-0.05% (1-500 ppm) of 2-Bromo-2-nitro-1,3-propanediol (Bronopol) and/or 0.001-0.2% (10-2000 ppm) 3-iodo-2-propynylbutylcarbamate (IPBC). The preferred wet state preservatives mainly function as bactericides, with the exception of 2-octyl-2H-isothiazol-3-one (OIT), zinc pyrithione (ZnPT) and 3-iodo-2-propynylbutylcarbamate (IPBC) which are known to mainly function as fungicides.

One preferred coating composition of the present invention comprises ≤0.20 wt%, preferably ≤0.15 wt%, more preferably ≤0.10 wt% and still more preferably ≤0.09 wt% wet state preservatives, based on the total weight of the composition. More preferably such a composition comprises 0.0001-0.20 wt%, preferably 0.0015-0.15 wt%, more preferably 0.01-0.10 wt% and still more preferably 0.01-0.09 wt% wet state preservative, based on the total weight of the composition.

Another preferred coating composition of the present invention comprises ≤0.10 wt%, preferably ≤0.075 wt%, more preferably ≤0.05 wt% and still more preferably ≤0.25 wt% wet state preservatives, based on the total weight of the composition. More preferably such a composition comprises 0.0001-0.10 wt%, preferably 0.0015-0.075 wt%, more preferably 0.01-0.05 wt% and still more preferably 0.01-0.025 wt% wet state preservative, based on the total weight of the composition.

Another preferred coating composition of the present invention comprises ≤0.01wt%, preferably ≤0.0015 wt%, more preferably <0.0001 wt% and still more preferably 0 wt% wet state preservatives, based on the total weight of the composition. More preferably such a composition comprises 0-0.01 wt%, preferably 0-0.0015 wt%, more preferably 0 to <0.0001 wt% wet state preservatives, based on the total weight of the composition.

One particularly preferred coating composition of the present invention comprises ≤0.01wt%, preferably ≤0.0015 wt%, more preferably <0.0001 wt% and still more preferably 0 wt% wet state preservatives selected from reaction mass of 5-chloro-2-methyl-4-isothiazolin-3-one and 2-methyl-2H-isothiazol-3-one (3:1) (CIT/MIT), 5-chloro-2-methyl-4-isothiazolin-3-one (CIT), 2-methyl-4-isotiazolin-3-one (MIT), 2-methyl-1,2-benzisothiazol-3(2H)-one (MBIT), 1,2-benzisothiazolin-3-one (BIT), benzamide, 2,2'-dithiobis (DTBMA), 2,2-dibromo-2-cyanoacetamide (DBNPA), sodium pyrithione (NaPT), 2-bromo-2-nitro-1,3-propanediol (Bronopol), based on the total weight of the composition.

An advantage of the method of the present invention is that the need for wet state preservatives is reduced.

*Dry film preservatives*

A coating composition of the present invention optionally comprises one or more dry film preservatives. When the coating composition is a coating composition for exterior use or humid interior conditions, the composition preferably comprises a dry film preservative.

The amount of dry film preservative present in the coating composition mainly depends on the intended purpose of the composition. If, for example, the coating composition is a coating composition for interior use the composition may contain relatively low amount or be substantially free of dry film preservative. If present, such a composition preferably comprises 0.005-0.50 wt%, preferably 0.01-0.40 wt%, more preferably 0.015-0.30 wt%, and still more preferably 0.02-0.20 wt% dry film preservatives, based on the total weight of the composition.

On the other hand, if the coating composition is a coating composition for exterior use, the composition preferably comprises 0.05-5 wt%, preferably 0.1-2.5wt%, more preferably 0.15-2 wt%, and still more preferably 0.25-1.5 wt% dry film preservatives, based on the total weight of the composition.

Representative examples of suitable dry film preservatives that may be present in the coating composition of the present invention include:

Isothiazolines: 4,5-Dichlor-2-n-octyl-4-isotiazolin-3-one (DCOIT); 2-Octyl-2H-isothiazol-3-one (OIT); 2-n-butylbenzo [d]isothiazol-3-one (BBIT);
2-thiazol-4-yl-1Hbenzoimidazole (Thiabendazole);
Azoles: Methyl (E)-2-{2-[6-(2-cyanophenoxy)pyrimidin-4-yloxy]phenyl}-3-methoxyacrylate (Azoxystrobin); 1-[[2-(2,4-dichlorophenyl)-4-propyl-1,3-dioxolan-2-yl]methyl]-1H-1,2,4-triazole (Propiconazole); 1-(4-chlorophenyl)-4,4-dimethyl-3-(1,2,4-triazol-1-ylmethyl)pentan-3 ol (Tebuconazole);
Amides/Ureas: 3-(3,4-dichlorophenyl)-1,1-dimethylurea (Diuron); 3-(4-Isopropylphenyl)-1,1-dimethylurea (Isoproturon);
Pyrithiones: Zinc pyrithione (ZnPT); Sodium pyrithione (NaPT);
Organohalogens: 4-(2,2-difluoro-1,3-benzodioxol-4-yl)-1H-pyrrole-3-carbonitrile (Fludioxonil); Dichloro-N-[(dimethylamino)sulphonyl] fluoro-N-(ptolyl)methanesulphenamide (Tolylfluanid);
Carbamates: 3-iodo-2-propynylbutylcarbamate (IPBC); Methyl 2-benzimidazoie carbamate (Carbendazim);
Silver chemistry: Reaction mass of titanium dioxide and silver chloride ; Silver copper zeolite; Silver nitrate ; Silver phosphate glass ; Silver sodium hydrogen zirconium phosphate; Silver zeolite; Silver zinc zeolite; and
Triazines: (4E)-4-(Ethylimino)-N-(2-methyl-2-propanyl)-6-(methylsulfanyl)-1,4-dihydro-1,3,5-triazin-2-amine (Terbutryn).

Preferably the dry film preservative present in the coating composition of the present invention is selected from 3-(3,4-dichlorophenyl)-1,1-dimethylurea (Diuron), (4E)-4-(Ethylimino)-N-(2-methyl-2-propanyl)-6-methylsulfanyl)-1,4-dihydro-1,3,5-triazin-2-amine (Terbutryn), carbendazim, zinc pyrithione, 2-octyl-2H-isothiazol-3-one (OIT), 4,5-dichlor-2-n-octyl-4-isotiazolin-3-one (DCOIT), 3-iodo-2-propynylbutylcarbamate (IPBC), Methyl (E)-2-{2-[6-(2-cyanophenoxy)pyrimidin-4-yloxy]phenyl}-3-carmethoxyacrylate (Azoxystrobin) and combinations thereof.

If present the dry film preservative is preferably present in the following amounts; 0.1-3.0% (1000-30000 ppm) of 3-(3,4-dichlorophenyl)-1,1-dimethylurea (Diuron), 0.1-3.0% (1000-30000 ppm of (4E)-4-(Ethylimino)-N-(2-methyl-2-propanyl)-6-methylsulfanyl)-1,4-dihydro-1,3,5-triazin-2-amine (Terbutryn), 0.01-0.3% (100-3000 ppm) of carbendazim, 0.01-0.5% (100-5000 ppm) of zinc pyrithione, 0.001-0.3% (10-3000 ppm) of 2-octyl-2H-isothiazol-3-one (OIT), 0.001-0.3% (10-3000 ppm) of 4,5-dichlor-2-n-octyl-4-isotiazolin-3-one (DCOIT), 0.01-0.75% (100-7500 ppm) 3-iodo-2-propynylbutylcarbamate (IPBC) and/or 0.01-0.75% (100-7500 ppm) Methyl (E)-2-{2-[6-(2-cyanophenoxy)pyrimidin-4-yloxy]phenyl}-3-carmethoxyacrylate (Azoxystrobin). The preferred dry film preservatives are fungicides, with the exception of Diuron and Terbutryn which are known to function as algicides.

*Other ingredients*

In preferred methods of the invention, said coating composition comprises one or more of: (a) wetting and/or dispersing agent; (b) foam control agent; (c) colour pigment; (d) filler; (e) rheology modifier and/or (f) pH modifier.

The coating composition of the present invention preferably comprises a wetting and/or dispersing agent. Wetting and/or dispersing agents are typically added to disperse and/or stabilize pigments and fillers in the coating composition. Wetting and dispersing agents are often also referred to as surfactants.

A wide range of wetting and dispersing agents is commercially available, and may be used in the coating composition of the present invention. Suitable wetting and dispersing agents include conventional anionic, cationic, nonionic and amphoteric wetting and dispersing agents as well as combinations thereof. Preferably a mixture of wetting and dispersing agents is used.

Another type of wetting agent is a substrate wetting agent.

The coating composition of the present invention preferably comprises 0-4.0 wt%, preferably 0.05-3.0 wt%, more preferably 0.10-2.0 wt%, and still more preferably 0.10-1.5 wt% wetting and/or dispersing agent, based on the total weight of the composition.

The coating composition of the present invention preferably comprises a foam control agent. Foam control agents are sometimes also referred to as defoamers.

A wide range of foam control agents are commercially available, and may be used in the coating composition of the present invention. Representative examples of suitable foam control agents include organic siloxanes, polyethers, polyether-modifed silicones, mineral oils and combinations thereof.

The coating composition of the present invention preferably comprises 0.05-3.0 wt%, preferably 0.05-2.5 wt%,

more preferably 0.10-2.0 wt%, and still more preferably 0.10-1.5 wt% foam control agent, based on the total weight of the composition.

Optionally the coating composition comprises one or more colour pigments. Depending on which colour is desired, different types and amounts of colour pigments are preferred. The coating composition may comprise at least 2 colour pigments or at least 3 colour pigments. The coating composition may comprise 2-8 colour pigments, such as 3-6 colour pigments.

Optionally the coating composition comprises $TiO_2$ as a colour pigment. $TiO_2$ is preferred in coating compositions where a relatively light colour is desired. In other preferred coating compositions $TiO_2$ is absent.

Representative examples of suitable colour pigments include inorganic pigments, organic pigments or a mixture thereof.

Representative examples of suitable inorganic pigments include metal oxides (e.g. titanium dioxide, iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. A huge range of suitable pigments are commercially available.

Preferably the total amount of TiOz present in the coating composition is 0-35wt%, and more preferably 0-30 wt% based on the total weight of the composition.

The amount of colour pigments vary depending on chosen colour. The total amount of colour pigments (other than $TiO_2$) present in the coating composition may be 0-30 wt%, preferably 0-27 wt% and more preferably 0-25 wt%, based on the total weight of the composition.

The coating composition of the present invention optionally comprises fillers. Inorganic or organic fillers may be present. Suitable inorganic and organic fillers are commercially available.

Examples of suitable inorganic fillers include silicas (quartz, diatomaceous earth, perlite, glass spheres, ceramic spheres), silicates (nepheline syenite, talc, kaolin, mica), carbonates (e.g. calcium carbonate, dolomite) and sulphates (e.g. barium sulphate). Inorganic fillers may be used to enhance the optical and/or mechanical properties and/or increase the volume or bulk of a coating composition. Typically, inorganic fillers are substantially insoluble in the composition, and are dispersed therein. If present, the average particle size ($D_{50}$) of the inorganic filler is 1.0-300 μm, more preferably 1.0-200 μm and still more preferably 2.0-100 μm, as determined by ISO 13320:2009 using a Malvern Mastersizer 2000.

Alternatively or additionally, the coating composition of the present invention may comprise one or more organic fillers. The organic filler is preferably solid organic filler particles, which are different to any solid binder particles present in the composition. Thus any solid organic filler particles present, are added separately to the binder during preparation of the coating composition of the invention.

Preferably the solid organic filler particles present in the coating composition of the invention are non-expandable and/or non-compressible at atmospheric conditions, i.e. 20 °C and 1 atmosphere. This is beneficial as it means that the filler particles do not change shape and/or size during processing.

The solid organic filler particles preferably comprise, and more preferably consist of poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), and copolymers thereof.

Preferred solid organic filler particles present in the coating composition of the present invention are cross-linked.

The solid organic filler particles optionally present in the coating composition of the invention are substantially spherical and more preferably spherical.

Preferably the solid organic filler particles have a $D_{50}$ of 1 to 50 μm, more preferably 1 to 40 μm and still more preferably 5-30 μm, as determined by ISO 13320:2009 using a Malvern Mastersizer 2000

A coating composition of the present invention preferably comprises 0-70 wt%, preferably 0-65 wt%, more preferably 1-60 wt%, and still more preferably 5-50 wt% filler (i.e. the total of inorganic and organic filler present), based on the total weight of the composition.

The coating composition of the present invention optionally comprises a rheology modifier. Still more preferably the composition of the invention comprises a mixture of at least 2 rheology modifiers. The presence of rheology modifier in the compositions of the invention advantageously improves the body of the coating composition and the application properties of the coating.

The rheology modifier present in the coating compositions of the invention is preferably a polysaccharide

rheology modifier, an associative rheology modifier, non-associative rheology modifier, a clay (e.g. organically modified phyllosilicates) or a mixture thereof. Cellulosic rheology modifiers (e.g. hydroxyethyl cellulose) may also be used.

Exemplary polysaccharide rheology modifiers for use in the coating compositions include cellulose ethers, micro fibrillated cellulose, alginates, guar gum, locust bean gum and xanthan gum.

Exemplary clay rheology modifiers for use in the coating compositions of the invention include kaolin clay, smectite clay, illite clay, chlorite clay, synthetic clay or organically modified clay.

Exemplary associative rheology modifiers for use in the coating compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative rheology modifiers. Particularly preferred associative rheology modifiers present in the coating composition of the invention are hydrophobically modified ethoxylated urethanes (HEUR) and hydrophobically modified alkali-swellable emulsions (HASE). When one or more suitable associative rheology modifiers are used, the thickening reaction is caused in part by either association between the associative rheology modifier and at least one other particle of the coating composition (e.g., a pigment particle or polymer particle) or another associative rheology modifier molecule.

Exemplary non-associative rheology modifiers are alkali-swellable emulsions (ASE).

A preferred coating composition of the present invention comprises 0-8.0 wt%, preferably 0.10-6.0 wt%, more preferably 0.15-5.0 wt%, and still more preferably 0.20-4.0 wt% rheology modifier, based on the total weight of the composition.

The coating composition of the present invention optionally comprises a pH modifier. Preferably the type and amount of pH modifier is selected so as to adjust the pH of the coating composition to 7.0-12.0, and preferably 7.5-11.0.

The pH modifier present in the coating composition of the invention is preferably selected from alkali metal hydroxide, alkaline earth metal hydroxide, alkali metal carbonate, ammonium hydroxide, ammonia, amines, alkylalkoxysilanes, alkylalkoxysiloxanes, monoalkylsilanetriol, dialkylsilanediol, trialkylsilanol, alkali metal salts of monoalkylsilanetriol and combinations thereof. Examples of suitable alkali metal hydroxide include lithium hydroxide, potassium hydroxide, and sodium hydroxide. Examples of suitable alkaline earth metal hydroxide include calcium hydroxide and magnesium hydroxide. Examples of suitable alkali metal carbonate include sodium carbonate and sodium bicarbonate. Examples of suitable amines include 2-amino-2-methyl-1,3-propanediol, 2-amino-2-ethyl-1,3-propanediol, 2-dimethylamino-2-methylpropanol, dimethylglucamine, 2-amino-1-butanol, tris(hydroxymethyl)aminomethane, 2-amino-2-methyl-1-propanol, and 1-amino-2-methyl-2-propanol.

Preferred pH modifiers present in the coating composition of the present invention are selected from sodium hydroxide, ammonia, 2-amino-2-methyl-1-propanol or combinations thereof.

The amount of pH modifier present in the coating composition of the present invention depends on the nature of the pH modifier used (e.g. its alkalinity) and on the nature (e.g. acidity) of the other ingredients present in the composition. The skilled person will readily be able to determine a suitable amount of pH modifier based on the target pH, e.g. 7.0-12.0, preferably 7.5-11.0.

The coating composition of the present invention preferably comprises 0-5.0 wt%, preferably 0.01-3.0 wt%, more preferably 0.01-2.0 wt%, and still more preferably 0.01-1.0 wt% pH modifier, based on the total weight of the composition.

Other ingredients that may be present in the coating composition of the present invention are opacifiers (e.g. Ropaque Ultra E, Celocor 2801 and AQACell HIDE 6399), matting agents (e.g. amorphous silica), waxes, driers (also called siccatives), adhesion promotors, flash rust inhibitors, anticorrosion agents, reinforcing agents, anti-static agents, flame retardant agents, lubricants, plasticizers, cosolvents and coalescent.

Optionally the composition of the present invention comprises light stabilisers (e.g. hindered amine light stabilisers).

Optionally the composition of the present invention comprises UV absorbents.

A preferred coating composition comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, fatty acid modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) water; and
(iii) $\leq$0.20 wt%, preferably $\leq$0.15 wt%, more preferably $\leq$0.10 wt%, and still more preferably $\leq$0.09 wt% wet state preservative.

Preferably the coating composition further comprises one or more selected from: (a) wetting and/or dispersing

agent; (b) foam control agent; (c) colour pigment; (d) filler; (e) rheology modifier and/or (f) pH modifier.

Another further preferred coating composition comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, fatty acid modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) water; and
(iii) ≤0.10 wt%, preferably ≤0.075 wt%, more preferably ≤0.05 wt%, and still more preferably ≤0.025 wt% wet state preservative.

Preferably the coating composition further comprises one or more selected from: (a) wetting and/or dispersing agent; (b) foam control agent; (c) colour pigment; (d) filler; (e) rheology modifier and/or (f) pH modifier.

Another preferred coating composition comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, fatty acid modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) water; and
(iii) ≤0.01 wt%, preferably ≤0.0015 wt%, more preferably <0.0001 wt%, and still more preferably 0 wt% wet state preservative.

Preferably the coating composition further comprises one or more selected from: (a) wetting and/or dispersing agent; (b) foam control agent; (c) colour pigment; (d) filler; (e) rheology modifier and/or (f) pH modifier.

*Properties of composition*

In preferred methods of the present invention, said coating composition is supplied in step (i). Optionally, the method of the present invention comprises the further step of making said coating composition. Advantageously, the method of the present invention may be integrated into the overall method of making the coating composition.

In preferred methods of the present invention, said coating composition has a conductivity of 0.5-9.0, more preferably 0.8-8.0 and still more preferably 1.0-7.5 mS/cm, preferably as determined according to the method in the examples. This ensures that ohmic heating effectively heats the composition when an AC current is applied.

In further preferred methods of the present invention, said coating composition provided in step (i) has a Stormer viscosity of 40-141 KU, preferably 70-140 KU and still more preferably 90-138 KU, preferably as determined according to the method in the examples.

In further preferred methods of the present invention, said coating composition provided in step (i) has a Cone and Plate viscosity of 10-10000 cP, preferably 20-1000 cP and still more preferably 50-500 cP, preferably as determined according to the method in the examples.

In further preferred methods of the present invention, said coating composition provided in step (i) has a low shear viscosity of 100-200000 cP, preferably 200-100000 cP and still more preferably 500-60000 cP, preferably as determined according to the method in the examples.

In further preferred methods of the present invention, said coating composition provided in step (i) has a PVC of 0-90, preferably 5-85 and still more preferably 5-75.

*Storage of composition*

A significant advantage of the method of the present invention is that it enables the coating composition to be stored in uncontrolled conditions, i.e. conditions without temperature or humidity control. This is because the method of the invention effectively kills microorganisms present in the composition that are introduced during the manufacturing process. As a result, there are no microorganisms remaining in the composition to proliferate, so special storage conditions can be avoided.

Thus the method of the present invention also relates to a method for storing a coating composition in a container for at least 28 days comprising:

(i) preparing the composition for storage by the method as hereinbefore described; and
(ii) storing said composition in a container for at least 28 days, preferably at 15-40 °C.

In preferred methods of the present invention, said storage in a container for at least 28 days is at 17-35 °C, and more preferably 20-30 °C. Preferably no refrigeration is required for storage. Preferably no temperature control is required for storage.
In preferred methods of the present invention, said storage in a container is for at least 175 days, more preferably at least 365 days, and still more preferably at least 1095 days.
In preferred methods of the invention, said coating composition shows no physical evidence of microbial contamination after said storage. Thus preferably the coating composition does not have an off smell after said storage. More preferably the amount of bacteria in the coating composition after storage is <1000 cfu/g and more preferably <100 cfu/g, as determined according to the method described in the examples herein.
A further advantage of the method of the invention is that it does not cause any significant change in the properties of the composition, e.g. it does not undergo crosslinkling or further polymerisation at the elevated temperatures.
In preferred methods of the invention, the Stormer viscosity of said coating composition changes by less than ±15% and more preferably ±13% after said storage.
In further preferred methods of the invention, the Cone and Plate viscosity of said coating composition changes by less than ±25% and more preferably ±20% after said storage.
In further preferred methods of the invention, the Stormer viscosity of said coating composition changes by less than ±15% and more preferably ±13% after said storage and the Cone and Plate viscosity of said coating composition changes by less than ±25% and more preferably ±20% after said storage.
In further preferred methods of the invention, the syneresis of said coating composition does not change after said storage, e.g. as determined by the method set out in the examples.
In further preferred methods of the invention, the settling of said coating composition does not change after said storage, e.g. as determined by the method set out in the examples.

*Stored Composition*

The present invention also relates to a stored coating composition obtainable by the method as hereinbefore described, wherein said composition shows no physical evidence of microbial contamination after said storage and/or the Stormer viscosity of said composition changes by less than ±15% after said storage and/or the Cone and Plate viscosity of said coating composition changes by less than ±25% and more preferably ±20% after said storage.
The present invention also relates to a container containing a coating composition comprising a binder, water, and optionally biocide, wherein said container has been stored at a storage temperature of 15-40 °C for at least 28 days, and said composition shows no physical evidence of microbial contamination after said storage; and/or the Stormer viscosity of said composition changes by less than ±15% after said storage.
Preferably the container has a volume of 0.5-1000 L, more preferably 0.5-100 L and still more preferably 0.5-20 L.
The stored coating composition and the coating composition contained in a container comprises the same preferred ingredients and has the same preferred properties as set out herein in relation to the method.
The stored coating composition preferably has a Stormer viscosity of 40-141 KU, preferably 70-140 KU and still more preferably 90-138 KU, preferably as determined according to the method in the examples.
The stored coating composition preferably has a Cone and Plate viscosity of 10-10000 cP, preferably 20-1000 cP and still more preferably 50-500 cP, preferably as determined according to the method in the examples.
The stored coating composition preferably has a low shear viscosity of 100-200000 cP, preferably 200-100000 cP and still more preferably 500-60000 cP, preferably as determined according to the method in the examples.

EXAMPLES

Test Methods

• Determination of particle size of polymer dispersions

Particle size analyses were performed according to ISO 22412:2017 by using a Malvern Zetasizer Nano S utilizing Dynamic Light Scattering (DLS). Optical arrangement for DLS was homodyne detection (backscattering detection). Computational unit evaluation was done via autocorrelation function. Evaluation of results was done via correlation analysis using cumulant method. Temperature = 25 °C. The measured particle size is reported as the Z-average diameter.

• Test method to assess microbiological quality of the coating compositions

This test was done to assess the microbiological quality of the coating compositions. The method was used to ensure that the coating compositions was infected with bacteria before ohmic heating, and to assess the microbiological quality after ohmic heating.

Tryptone Soya Agar (TSA) with 2,3,5-triphenyltetrazolium chloride (TTC) was used to determine total bacteria in the sample (coating composition). A sterile cotton swab was immersed in the coating composition, and excess material was removed by pressing the cotton swab against the inside of the sample container. The sample was streaked over the agar surface, evenly distributing the material on the agar. TSA plates were incubated at 30°C for 72 hours before evaluation. The number of colony forming units (cfu) was determined visually by counting, and the plates were scored according to the rating in Table 1. The table indicates if the microbiological result was acceptable or not.

Table 1. Scoring of microbiological quality

| Score | Growth on agar plate | cfu/g in sample | Evaluation of result |
|---|---|---|---|
| 0 | No growth | < $10^2$ | OK |
| 1 | Minimal growth: 1-10 colonies on agar plate | $10^2$ - $10^3$ | OK |
| 2 | Slight growth: maximum 100 colonies on agar plate | $10^3$ - $10^4$ | Not acceptable |
| 3 | Medium growth: maximum 300-400 colonies on agar plate | $10^4$ - $10^5$ | Not acceptable |
| 4 | Equal growth: possible to differentiate single colonies, more than 400 colonies on agar plates | $10^5$ - $10^6$ | Not acceptable |
| 5 | Heavy growth: not countable, but agar plate is not fully grown | $10^6$ - $10^7$ | Not acceptable |
| 6 | Heavy growth: no visible single colonies on agar plate | > $10^7$ | Not acceptable |

• Conductivity measurements

The conductivity of the coating compositions was measured with a conductivity meter (TW ProfiLine Cond 3310) and Four-electrode conductivity cells (TetraCon® 325). The sample temperature for conductivity measurements was 23 ±1 °C. The conductivity meter is calibrated with standard solutions of 84 μS/cm, 1408 μS/cm and 11.3 mS/cm.

• Determination of Stormer viscosity

The viscosity of the coating compositions was determined according toASTM D562-10(2014) Method B using a digital Stormer-type viscometer. The measurement was done on samples in a 250 mL container at 23±1°C.

• Determination of high shear viscosity

The high shear viscosity of the coating compositions was determined according to ISO 2884-1:2006 using a Cone and Plate viscometer set at a temperature of 23±1°C, working at a shear rate of 10000 s-1, providing a viscosity measurement range of 0-10 P. The result given is the average of three measurements. A Brookfield CAP 1000+ Viscometerwith spindle CAP02 was used.

• Determination of low shear viscosity

The low shear viscosity of the coating composition was determined in accordance with ASTM D2196 Test Method A by using a rotational viscometer of type Brookfield RVDV with a RV (4) spindle at a rotational speed of 5 rpm. The coating composition samples were conditioned to a temperature of 23 ±1°C before measurement. The measurement was done on samples in a 250 mL container.

• pH measurements

The pH of the coating compositions was measured with a pH meter (InoLab pH7110) and a precision electrode with temperature sensor (WTW SenTix 81). The pH meter was calibrated with buffer solution with pH 7.0 and pH 10.0. The sample temperature for pH measurements was 23 ±1 °C.

• Determination of the density of the coating compositions

The density of the coating compositions was determined according to ISO 2811-1:2016 using a metal pycnometer at 23±1°C. The measurement was done on samples in a 100 mL container.

• Calculating PVC and vol% solids

According to ISO 4681/1 the PVC refers to the ratio of the volume of pigment and other solids particles in a product to the total volume of the non-volatile matter.
In order to be able to calculate the Pigment Volume Concentration (PVC) of a coating from a formulation expressed in proportions by weight, the non-volatile content and density of every component of the coating material is required. From these parameters the approximate volume of the individual components in the coating film can be calculated.
The following equation was used for the calculation of PVC (European Coatings Handbook, Ulrich Zorll, Vincent Verlag 2000):

$$\text{PVC [\%]} = \frac{\sum \text{Vpigments} + \sum \text{Vfillers}}{\sum \text{Vpigments} + \sum \text{Vfillers} + \sum \text{Vbinders}} * 100$$

$$= \frac{\sum \text{Vpigments} + \sum \text{Vfillers}}{\sum \text{Vtotal}} * 100$$

The following equations were used to calculate vol% solids:

$$\text{Volume} = (\text{weight} / \text{density})$$

$$\text{Vol\% solid} = \frac{\sum \text{Vol pigments and filler} + \sum \text{Vol solid binder} + \sum \text{Vol solid additives}}{\textit{Total wet paint volume}} * 100$$

• Calculation of Volatile Organic Compounds (VOC)

This was calculated according to the following equation:

$$\text{VOC [g/L]} = \frac{\text{total weight VOC [g]}}{(\textit{weight paint} \,/\, \textit{measured density paint})\ \text{[L]}}$$

• Determination of Gloss

The gloss at various angles was determined according to NS-EN ISO 2813. A stationary BYK-micro-tri-gloss instrument was used. The coating compositions were applied on glass panels using a 100 μm applicator and dried at room temperature with a fan for 15 minutes and at 50±1°C for 15 minutes. The glass panels were cooled at ambient temperature for 1 hour before the gloss was measured. Values for 60° and 85° are reported as an average of three measurements.

• Determination of Colour strength

Determination of relative colour strength in white lightened media with use of photometric method is based on EN ISO 787-24:1995 Part 24. Colour strength is determined relative to a standard. The procedure is based on the dilution with a defined black colorant.
The colour strength is evaluated by light absorption. The reflectivity is measured photometrically at 540 nm with illuminant D65. Relative colour strength can be defined as the ratio of K/S values for samples as compared to a standard at same wavelength, which expressed as percentage. ‘K’ and ‘S’ are absorption and scattering coefficients of a sample.

$$K/S = \frac{(1 - R_\infty)^2}{2\,R_\infty}$$

$$R_\infty = \frac{\rho_\infty}{0.96 - 0.6(0.96 - \rho_\infty)}$$

K = Absorption

S = Scattering

$R_\infty$ = Reflection grade

$\rho_\infty$ = reflection value

$$\text{Relative colour strenght} = \frac{\frac{K}{S}\,sample}{\frac{K}{S}\,standard} * 100$$

Colour strength below 100% means strong and above 100% means that the batch is weaker than the reference and more titanium dioxide is needed to achieve required color shade.

• Evaluation of settling and syneresis

Settling and syneresis was evaluated after storage of the coating composition at 50±1°C for 4 weeks in a 250 mL container. The coating compositions temperature was first conditioned to 23±1°C without shaking or agitation. A small spatula (approx. 1-2 cm tip size) was used to check if there was any separation in the coating composition. A low viscosity phase on top was defined as syneresis. The syneresis was measured in mm with a ruler. After examination of syneresis the spatula was turned down to the bottom of the container to evaluate if settling or a cake was formed. If the coating composition had a homogenous consistence it was rated as "no settling" and if a settling or cake formation was felt it was rated as "settling".

Materials

The compounds and polymers used in the examples were all purchased commercially. The polymer dispersions employed in the examples are summarised in Table 2 below (n.a. = not available).

Table 2

| | **Type** | **MFFT (°C)** | **Tg (°C)** | **Particle size, average diameter (nm)** | **Solid content (wt% in water)** |
|---|---|---|---|---|---|
| Polymer dispersion 1 | Poly(ethylene-vinyl acetate) | 0 | 12 | 370 | 53 |
| Polymer dispersion 2 | Poly(meth)acrylic | <5 | n.a. | 110 | 46 |
| Polymer dispersion 3 | Aliphatic polyurethane modified with fatty acids | <0 | n.a. | n.a | 40 |
| Polymer dispersion 4 | Poly(meth)acrylic | < 5 | 6 | 126 | 46 |

Procedure for the preparation of coating compositions

The components of the coating compositions were mixed in the proportions set out in Tables 3 and 4. The coating compositions were prepared by a two-step process, a grind phase and a let-down phase. In the grind phase, titanium dioxide and fillers were wetted and dispersed. The grind phase was prepared by mixing water, dispersing and wetting

agents, foam control agents, high shear rheology modifiers, titanium dioxide and fillers with high shear agitation. Approximately 80 % of the amount of water, and foam control agents, were added to the grind phase. High shear agitation was continued until a fineness of grind of 10-80 μm was achieved. In the coating compositions containing matting agent, the matting agent were mixed into the grind with lower shear rate at the end of the grind phase.

In the letdown phase, the grind phase was mixed with the polymer dispersion during low shear agitation. In the coating compositions containing opacifier, the opacifier was mixed with the polymer dispersion, before adding the grind phase. Cosolvents, coalescent, driers, biocides, pH modifiers, low and mid shear rheology modifiers were added in the let-down phase. The rest of the foam control agents and water were added in the let-down phase.

Coating compositions 3, 5 and 7 were made using a dissolver. Coating compositions 1, 2, 4, 6 and 8 were made using an in-line mixer. The coating compositions were prepared on a 8,000 L scale.

Table 3

| **Ingredients (wt%)** | **Ex 1** | **Ex 2** | **Ex 3** | **Ex 4** |
|---|---|---|---|---|
| Polymer dispersion 1 | | 13.0 | | |
| Polymer dispersion 2 | 38.2 | | 53.7 | |
| Polymer dispersion 3 | | | | 38.4 |
| $TiO_2$ | 21.0 | 14.2 | | 23.9 |
| Fillers | 15.2 | 22.6 | 25.0 | 10.7 |
| Matting agent | | | | 3.1 |
| Opacifier | 5.7 | 6.7 | | |
| Wetting and dispersing agents | 0.80 | 0.46 | 0.43 | 2.2 |
| Foam control agents | 0.51 | 0.51 | 0.61 | 0.45 |
| Rheology modifiers | 2.5 | 2.9 | 2.5 | 2.3 |
| NaOH aq. (10 wt% in water) | 0.44 | 1.3 | 0.26 | |
| 2-Amino-2-methyl-1-propanol | | | | 0.13 |
| Water | 15.0 | 37.7 | 12.5 | 13.2 |
| Wet state preservative (10 wt% in water) | 0.59 | 0.66 | 0.39 | 0.58 |
| Driers | | | | 0.31 |
| Mono propylene glycol | | 0.34 | | 2.4 |
| Dipropylene glycol n-butyl ether | | 0.39 | | 2.4 |
| Wax | | | 4.6 | |
| Total | 100 | 100 | 100 | 100 |
| **Coating composition properties** | | | | |
| Density (kg/L) | 1.4 | 1.3 | 1.2 | 1.4 |
| Calculated PVC | 45 | 69 | 29 | 46 |
| Calculated VOC (g/L) | 1 | 10 | 1 | 78 |
| Calculated vol % solids | 40.6 | 29.7 | 43.1 | 35.3 |

Table 4

| **Ingredients (wt%)** | **Ex 5** | **Ex 6** | **Ex 7** | **Ex 8** |
|---|---|---|---|---|
| Polymer dispersion 1 | | 32.8 | 53.1 | |
| Polymer dispersion 3 | 57.1 | | | |
| Polymer dispersion 4 | | | | 41.6 |
| $TiO_2$ | | 20.7 | | 23.5 |
| Fillers | 15.2 | 15.1 | 20.3 | 13.6 |

(continued)

| Ingredients (wt%) | Ex 5 | Ex 6 | Ex 7 | Ex 8 |
|---|---|---|---|---|
| Matting agent | 4.3 | | | |
| Opacifier | | 6.6 | | |
| Wetting and dispersing agents | 1.2 | 0.62 | 0.19 | 1.54 |
| Foam control agents | 0.43 | 0.43 | 0.31 | 0.70 |
| Rheology modifiers | 3.0 | 2.5 | 3.0 | 2.1 |
| NaOH aq. (10 wt% in water) | | 1.5 | 2.2 | |
| 2-Amino-2-methyl-1-propanol | 0.13 | | | |
| Water | 12.3 | 19.1 | 20.3 | 16.0 |
| Wet state preservative (10 wt% in water) | 0.55 | 0.67 | 0.59 | 0.43 |
| Dry film preservative (fungicide) (50 wt% in water) | | | | 0.06 |
| Mono propylene glycol | 2.7 | | | |
| Dipropylene glycol n-butyl ether | 2.8 | | | |
| Driers | 0.30 | | | |
| Total | 100 | 100 | 100 | 100 |
| **Coating composition properties** | | | | |
| Density (kg/L) | 1.2 | 1.4 | 1.2 | 1.4 |
| Calculated PVC | 26 | 44 | 23 | 40 |
| Calculated VOC (g/L) | 77 | <1 | <1 | <1 |
| Calculated vol % solids | 32.2 | 40.1 | 39.8 | 41.4 |

The microbiological quality and electrical conductivity of the coating compositions were tested prior to application of the method of the invention. The results are shown in Tables 5 and 6 below. Coating composition Ex 1-1 and Ex 2-1 were naturally spoiled with bacteria from the manufacturing process.

Table 5. Microbiological quality of coating compositions before ohmic heating

| | Score for Microbiological quality |
|---|---|
| Ex 1-1 | 6 |
| Ex 2-1 | 6 |
| Ex 1-2 | 0 |
| Ex 2-2 | 0 |
| Ex 3 | 0 |
| Ex 4 | 0 |
| Ex 5 | 0 |
| Ex 6 | 0 |
| Ex 7 | 0 |
| Ex 8 | 0 |

Table 6. Electrical conductivity for the coating compositions

| | Electrical conductivity (mS/cm) |
|---|---|
| Ex 1-2 | 4.3 |
| Ex 2-2 | 3.2 |

(continued)

| | Electrical conductivity (mS/cm) |
|---|---|
| Ex 3 | 5.0 |
| Ex 4 | 1.5 |
| Ex 5 | 1.7 |
| Ex 6 | 4.7 |
| Ex 7 | 7.2 |
| Ex 8 | 4.4 |

Ohmic heating

The ohmic heater used was a pilot production scale continuous flow ohmic heater capable of heating from ambient temperature to 90 °C in approximately 10 seconds. A schematic of the set up used is shown in Figure 1.

The heater consists of insulating pipe sections and several electrode housings. The composition to be heated was at ambient temperature when it reached the first electrode and reached the target temperature at the last electrode. The samples for microbiological testing and storage stability were sampled differently.

The ohmic heater was equipped with a cooling loop. The samples for evaluation of coating composition properties were sampled after the cooling loop and when the coating composition had a temperature of 30-60 °C, dependent on the target heating temperature used. The coating compositions were then cooled at room temperature to reach 23±1 °C before further testing.

The samples for microbiological testing were sampled at a sampling point shortly after the last electrode. Once the hold time for each sample was reached, the coating composition was immediately and rapidly cooled on ice bath to 23°C.

Approximately 50 L of coating composition was used for each run.

Different temperatures and holding times were tested, as set out in Table 7 and 8 below.

After the ohmic heating the coating compositions were stored at 23±1°C (with no humidity control) before their microbiological quality was evaluated. Note, the storage temperature for waterborne coating compositions is ideally between 15-30 °C. For the length of storage at 23±1°C see Tables 7 and 8. Their microbiological quality was evaluated according to the test method described above. The values given are averages from three independent ohmic heating runs.

In contrast to food, which is stored in a refrigerator that slows down the proliferation of microorganisms, coating compositions are stored at ambient temperatures, with ideal conditions for microbial proliferation. It is therefore essential that all microorganisms in the coating composition are eliminated by ohmic heating. If some bacteria survive, they will proliferate and re-contaminate the coating composition. Coating compositions also have a longer expected storage time in comparison to most liquid food products. The microbiological quality of the coating compositions was therefore evaluated at different storage lengths, Tables 7 and 8. The values given are averages from three independent ohmic heating runs.

Table 7. Microbiological quality after ohmic heating after storage at 23±1°C for different time lengths.

| | Ohmic heating conditions | Microbiological quality the same day as ohmic heating | Microbiological quality after 7 days | Microbiological quality after 28 days | Microbiological quality after 175 days |
|---|---|---|---|---|---|
| Ex 1-1 | 70°C, hold time 30 s | 1 | 2 | 2 | 2 |
| Ex 1-1 | 70°C, hold time 2 min | 1 | 3 | 3 | 3 |
| Ex 1-1 | 75°C, hold time 30 s | 0 | 0 | 0 | 0 |
| Ex 1-1 | 75°C, hold time 2 min | 0 | 0 | 0 | 0 |
| Ex 2-1 | 70°C, hold time 30 s | 1 | 2 | 2 | 2 |
| Ex 2-1 | 70°C, hold time 2 min | 0 | 1 | 2 | 2 |
| Ex 2-1 | 75°C, hold time 30 s | 0 | 0 | 0 | 0 |
| Ex 2-1 | 75°C, hold time 2 min | 0 | 0 | 0 | 0 |

Table 8. Microbiological quality of coating compositions after 28 and 175 days of storage after ohmic heating at different temperatures and times.

| Temperature (°C) | Hold time | Ex 1-1 (28 days) | Ex 1-1 (175 days) | Ex 2-1 (28 days) | Ex 2-1 (175 days) |
|---|---|---|---|---|---|
| 40 | 15 s | 6 | 5 | 6 | 5 |
| 40 | 15 min | 5 | 5 | 5 | 5 |
| 50 | 15 s | 5 | 6 | 6 | 6 |
| 50 | 15 min | 5 | 6 | 6 | 6 |
| 55 | 15 s | 6 | 5 | 6 | 6 |
| 55 | 15 min | 5 | 5 | 6 | 6 |
| 60 | 15 s | 4 | 3 | 6 | 5 |
| 60 | 15 min | 5 | 5 | 4 | 4 |
| 65 | 15 s | 3 | 4 | 4 | 4 |
| 65 | 15 min | 3 | 3 | 4 | 3 |
| 70 | 15 s | 3 | 3 | 2 | 2 |
| 70 | 30 s | 2 | 2 | 2 | 2 |
| 70 | 2 min | 3 | 3 | 2 | 2 |
| 70 | 10 min | 3 | 3 | 2 | 2 |
| 70 | 15 min | 2 | 2 | 2 | 2 |
| 75 | 15 s | 0 | 0 | 1 | 1 |
| 75 | 30 s | 0 | 0 | 0 | 0 |
| 75 | 1 min | 0 | 0 | 0 | 0 |
| 75 | 2 min | 0 | 0 | 0 | 0 |
| 75 | 3 min | 0 | 0 | 0 | 1 |
| 75 | 4 min | 0 | 0 | 0 | 0 |
| 75 | 5 min | 0 | 0 | 0 | 1 |
| 75 | 10 min | 0 | 0 | 0 | 0 |
| 75 | 15 min | 0 | 0 | 0 | 0 |
| 80 | 15 s | 0 | 0 | 0 | 1 |
| 80 | 30 s | 0 | 0 | 0 | 1 |
| 80 | 1 min | 0 | 0 | 0 | 0 |
| 80 | 2 min | 0 | 0 | 0 | 0 |
| 80 | 3 min | 1 | 0 | 0 | 1 |
| 80 | 4 min | 0 | 0 | 0 | 1 |
| 80 | 5 min | 0 | 0 | 0 | 0 |
| 80 | 10 min | 0 | 0 | 0 | 0 |
| 80 | 15 min | 0 | 0 | 0 | 1 |
| 85 | 15 s | 0 | 0 | 0 | 0 |
| 85 | 30 s | 0 | 0 | 1 | 1 |
| 85 | 1 min | 0 | 0 | 0 | 0 |
| 85 | 2 min | 0 | 0 | 0 | 0 |
| 85 | 3 min | 0 | 0 | 0 | 0 |
| 85 | 4 min | 0 | 0 | 0 | 1 |

(continued)

| Temperature (°C) | Hold time | Ex 1-1 (28 days) | Ex 1-1 (175 days) | Ex 2-1 (28 days) | Ex 2-1 (175 days) |
|---|---|---|---|---|---|
| 85 | 5 min | 0 | 0 | 0 | 1 |
| 85 | 10 min | 0 | 0 | 0 | 0 |
| 90 | 15 s | 0 | 0 | 0 | 0 |
| 90 | 30 s | 0 | 0 | 0 | 0 |
| 90 | 1 min | 0 | 0 | 0 | 1 |
| 90 | 2 min | 0 | 0 | 0 | 0 |
| 90 | 3 min | 0 | 0 | 0 | 0 |
| 90 | 4 min | 0 | 0 | 0 | 1 |
| 90 | 5 min | 0 | 0 | 0 | 0 |
| 90 | 10 min | 0 | 0 | 0 | 0 |

Heating the coating compositions with ohmic heating might have an impact on the properties and the storage stability of the coating compositions. Therefore, different coating compositions were tested to verify that the properties and storage stability is not changed after ohmic heating. Ohmic heating at 90°C or 75°C were chosen.

Storage stability of coating compositions are usually evaluated in an accelerated test. Coating compositions in 250 mL containers were placed in a heating cabinet at 50±1 °C for 4 weeks. This accelerated testing corresponds to at least 6 months at 23°C. After this, viscosity, syneresis, settling, pH, gloss and colour strength were measured. The values before and after storage at 50±1 °C for 4 weeks were compared. Viscosity, syneresis, settling, pH, gloss and colour strength were determined according to the test methods described above.

The start values given in the tables below are the properties measured before ohmic heating and before storage stability test. The temperature and time used for the ohmic heating are given in the Tables. The coating compositions were heated to the given temperature and time and then it was first cooled to approx. 50 °C in a cooling loop and then slowly cooled to 23 °C in a 1L can overnight. The coating composition properties were measured the day after ohmic heating (Day 1 in the Tables). Both samples heated and non-heated were tested according to storage stability test for 4 weeks at 50±1 °C. Colour strength was tested before ohmic heating, at day one after ohmic heating and after the coating compositions were stored for 1 week at 50±1 °C. For each coating composition one, two or three independent ohmic heating runs were made, see Tables. Average values are given in the Tables.

If coating compositions are infected by microorganisms the viscosity of the coating composition may change. To ensure that the evaluation of the coating composition properties after ohmic heating was directly related to the ohmic heating process coating compositions which was not infected by microorganisms were used.

Table 9. Coating composition properties Ex 1-2 after ohmic heating (90°C for 2 min) before and after storage (average of three parallel runs).

| | Without ohmic heating | | After ohmic heating | |
|---|---|---|---|---|
| **Ex 1-2** | **Start** | **After storage 50°C** | **Day 1** | **After storage 50°C** |
| Stormer (KU) | 125 | 127 | 123 | 123 |
| Cone & Plate (cP) | 209 | 200 | 204 | 204 |
| Low shear (cP) | 17100 | 19600 | 17000 | 17700 |
| pH | 8.5 | 8.4 | 8.6 | 8.4 |
| Colour strength | 109.8 | 114.0 | 109.8 | 114.7 |
| Syneresis (mm) | | 1 | | 1 |
| Settling | | No settling | | No settling |

Table 10. Coating composition properties Ex 2-2 after ohmic heating (90°C for 2 min) before and after storage (average of three parallel runs).

| | **Without ohmic heating** | | **After ohmic heating** | |
|---|---|---|---|---|
| **Ex 2-2** | **Start** | **After storage 50°C** | **Day 1** | **After storage 50°C** |
| Stormer (KU) | 131 | 138 | 131 | 136 |
| Cone & Plate (cP) | 151 | 150 | 152 | 152 |
| Low shear (cP) | 32000 | 37000 | 32000 | 37000 |
| pH | 8.1 | 7.9 | 8.1 | 7.9 |
| Colour strength | 97.2 | 106.0 | 97.2 | 106.7 |
| Syneresis (mm) | | 0 | | 0 |
| Settling | | No settling | | No settling |

Table 11. Coating composition properties Ex 3 after ohmic heating (90°C for 2 min) before and after storage (average of two parallel runs).

| | **Without ohmic heating** | | **After ohmic heating** | |
|---|---|---|---|---|
| **Ex 3** | **Start** | **After storage 50°C** | **Day 1** | **After storage 50°C** |
| Stormer (KU) | 141 | 136 | 135 | 133 |
| Cone & Plate | 211 | 192 | 213 | 190 |
| (cP) | | | | |
| Low shear (cP) | 28600 | 25700 | 24200 | 24600 |
| pH | 8.6 | 8.5 | 8.6 | 8.5 |
| Syneresis (mm) | | 0 | | 0 |
| Settling | | No settling | | No settling |

Table 12. Coating composition properties Ex 4 after ohmic heating (90°C for 2 min) before and after storage (average of two parallel runs).

| | **Without ohmic heating** | | **After ohmic heating** | |
|---|---|---|---|---|
| **Ex 4** | **Start** | **After storage 50°C** | **Day 1** | **After storage 50°C** |
| Stormer (KU) | 113 | 106 | 114 | 107 |
| Cone & Plate (cP) | 225 | 187 | 215 | 187 |
| Low shear (cP) | 7200 | 5200 | 7100 | 5000 |
| pH | 8.5 | 8.0 | 8.4 | 8.1 |
| Gloss 60° | 5 | 5 | 5 | 5 |
| Gloss 85° | 11 | 13 | 11 | 13 |
| Colour strength | 103.3 | 106.4 | 104.5 | 104.5 |
| Syneresis (mm) | | 0 | | 0 |
| Settling | | No settling | | No settling |

Table 13. Coating composition properties Ex 5 after ohmic heating (90°C for 2 min) before and after storage (average of three parallel runs).

| | **Without ohmic heating** | | **After ohmic heating** | |
|---|---|---|---|---|
| **Ex 5** | **Start** | **After storage 50°C** | **Day 1** | **After storage 50°C** |
| Stormer (KU) | 140 | 136 | 139 | 135 |

(continued)

| Ex 5 | Without ohmic heating | | After ohmic heating | |
|---|---|---|---|---|
| | Start | After storage 50°C | Day 1 | After storage 50°C |
| Cone & Plate (cP) | 240 | 230 | 241 | 228 |
| Low shear (cP) | 12700 | 10400 | 13700 | 10600 |
| pH | 9.1 | 8.4 | 9.1 | 8.4 |
| Gloss 60° | 3 | 4 | 3 | 4 |
| Gloss 85° | 9 | 10 | 9 | 11 |
| Syneresis (mm) | | 0 | | 0 |
| Settling | | No settling | | No settling |

Table 14. Coating composition properties Ex 6 after ohmic heating (75°C for 2 min) before and after storage (average of three parallel runs).

| Ex 6 | Without ohmic heating | | After ohmic heating | |
|---|---|---|---|---|
| | Start | After storage 50°C | Day 1 | After storage 50°C |
| Stormer (KU) | 114 | 125 | 112 | 123 |
| Cone & Plate (cP) | 172 | 176 | 187 | 181 |
| Low shear (cP) | 16800 | 19600 | 15200 | 17600 |
| pH | 8.5 | 7.8 | 8.5 | 7.8 |
| Colour strength | 92.4 | 96.5 | 93.7 | 97.2 |
| Syneresis (mm) | | 0 | | 0 |
| Settling | | No settling | | No settling |

Table 15. Coating composition properties Ex 7 after ohmic heating (75°C for 2 min) before and after storage (average of two parallel runs).

| Ex 7 | Without ohmic heating | | After ohmic heating | |
|---|---|---|---|---|
| | Start | After storage 50°C | Day 1 | After storage 50°C |
| Stormer (KU) | 120 | 135 | 120 | 130 |
| Cone & Plate (cP) | 168 | 169 | 171 | 165 |
| Low shear (cP) | 17500 | 25200 | 17000 | 20800 |
| pH | 7.9 | 7.3 | 7.9 | 7.3 |
| Syneresis (mm) | | 0 | | 0 |
| Settling | | No settling | | No settling |

Table 16. Coating composition properties Ex 8 after ohmic heating (75°C for 2 min) before and after storage (one run).

| Ex 8 | Without ohmic heating | | After ohmic heating | |
|---|---|---|---|---|
| | Start | After storage 50°C | Day 1 | After storage 50°C |
| Stormer (KU) | 125 | 134 | 125 | 132 |
| Cone & Plate (cP) | 163 | 163 | 165 | 158 |
| Low shear (cP) | 21600 | 26700 | 22200 | 25400 |
| pH | 8.6 | 8.3 | 8.6 | 8.6 |
| Colour strength | 105.2 | 113.3 | 106.3 | 114.7 |

(continued)

| Ex 8 | Without ohmic heating | | After ohmic heating | |
|---|---|---|---|---|
| | Start | After storage 50°C | Day 1 | After storage 50°C |
| Syneresis (mm) | | 10 | | 10 |
| Settling | | No settling | | No settling |

## Claims

**1.** A method of preparing a coating composition for storage in a container for at least 28 days, preferably at 15-40 °C, comprising:

(i) providing said composition;
(ii) heating said composition to a treatment temperature of greater than 70 °C by ohmic heating;
(iii) holding said composition at said treatment temperature for at least 1 second; and
(iv) cooling said composition;

wherein said composition comprises a binder, water and optionally biocide.

**2.** A method as claimed in claim 1, wherein during said holding step (iii), said coating composition has a temperature variation of less than ±4 °C, more preferably less than ±2 °C, and still more preferably less than ±1 °C, throughout its volume.

**3.** A method as claimed in claim 1 or 2, wherein said ohmic heating is carried out in a pipe or a duct, and preferably said coating composition continuously flows through said pipe or duct during said ohmic heating.

**4.** A method as claimed in claim 3, wherein the flow rate of said coating composition through said pipe or duct is 200-100,000 L/h.

**5.** A method as claimed in any one of claims 1 to 4, wherein the volume of said coating composition prepared per hour is 200-100,000 L, preferably 1000-50,000 L, more preferably 2000-20,000 L.

**6.** A method as claimed in any one of claims 1 to 5, wherein said coating composition is heated to a treatment temperature of >70-90 °C, more preferably 73-85 °C, and still more preferably 74-80 °C by ohmic heating.

**7.** A method as claimed in any one of claims 1 to 6, wherein said ohmic heating of said coating composition achieves the treatment temperature in 1-300 seconds, preferably 5-150 seconds and more preferably 10-90 seconds.

**8.** A method as claimed in any one of claims 1 to 7, wherein said coating composition is held at the treatment temperature for 1 second to 15 minutes, preferably 1 second to 5 minutes, more preferably 2 seconds to 2 minutes, and still more preferably 5 seconds to 1 minute.

**9.** A method as claimed in any one of claims 1 to 8, which is operated within a semi-automatic or automatic production line.

**10.** A method as claimed in any of claims 1 to 9, wherein said coating composition has a conductivity of 0.5-9.0, more preferably 0.8-8.0 and still more preferably 1.0-7.5 mS/cm.

**11.** A method as claimed in any one of claims 1 to 10, wherein said coating composition is a paint, primer, varnish, stain or lacquer, and more preferably a paint.

**12.** A method for storing a coating composition in a container for at least 28 days comprising:

(i) preparing the composition for storage by a method as claimed in any one of claims 1-11; and
(ii) storing said composition in a container for at least 28 days, preferably at 15-40 °C.

**13.** A method as claimed in claim 12, wherein said storage in a container is for at least 175 days, more preferably at least 365 days, and still more preferably at least 1095 days.

**14.** A stored coating composition obtainable by the method of claim 12 or 13, wherein said composition shows no physical evidence of microbial contamination after said storage and/or the Stormer viscosity of said composition changes by less than $\pm$15% after said storage and/or the Cone and Plate viscosity of said coating composition changes by less than $\pm$25% and more preferably $\pm$20% after said storage.

**15.** A container containing a coating composition comprising a binder, water, and optionally biocide, wherein said container has been stored at a storage temperature of 15-40 °C for at least 28 days, and said composition shows no physical evidence of microbial contamination after said storage; and/or the Stormer viscosity of said composition changes by less than $\pm$15% after said storage, and/or the Cone and Plate viscosity of said coating composition changes by less than $\pm$25% and more preferably $\pm$20% after said storage.

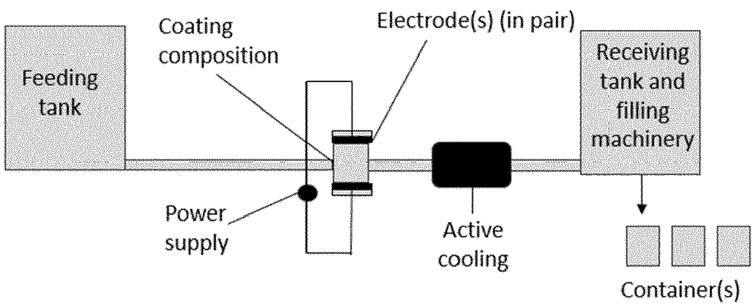
Feeding tank
Coating composition
Electrode(s) (in pair)
Receiving tank and filling machinery
Power supply
Active cooling
Container(s)

Figure 1

Europäisches Patentamt
European Patent Office
Office européen des brevets

# EUROPEAN SEARCH REPORT

Application Number
EP 24 16 1254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/296461 A1 (SADASIVAN LAKSHMI [US]) 7 November 2013 (2013-11-07)<br>* paragraph [0018] - paragraph [0040] *<br>* paragraph [0172] - paragraph [0223] *<br>* abstract; claims 1-33; examples 1-8; tables 1-12 * | 1-15 | INV.<br>C09D7/80 |
| X | WO 2011/017097 A1 (DU PONT [US]; HOFFMANN CHRISTIAN [US] ET AL.)<br>10 February 2011 (2011-02-10)<br>* page 3, line 10 - page 4, line 11 *<br>* page 15, line 27 - page 19, line 13 *<br>* claims 1-11; examples 1-12; tables 1-8 * | 1-15 | |
| X | WO 00/47682 A1 (NEW LAKE INTERNATIONAL LIMITED [IE]; FITZGERALD FERGUS RUPERT [IE]) 17 August 2000 (2000-08-17)<br>* page 1, line 26 - page 4, line 16 *<br>* abstract; claims 1-27 * | 1-15 | |
| X | WO 00/36029 A1 (KALON DECORATIVE PRODUCTS [GB]; LOMAX JIM [GB])<br>22 June 2000 (2000-06-22)<br>* page 5, line 28 - page 6, line 4 *<br>* abstract; claims 1-20; examples 1-5 * | 1-15 | TECHNICAL FIELDS SEARCHED (IPC)<br>C09D |

The present search report has been drawn up for all claims

1

| Place of search | Date of completion of the search | Examiner |
|---|---|---|
| Munich | 1 July 2024 | Glomm, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 16 1254

This annex lists the patent family members relating to the patent documents cited in the above-mentioned European search report. The members are as contained in the European Patent Office EDP file on
The European Patent Office is in no way liable for these particulars which are merely given for the purpose of information.

01-07-2024

| Patent document cited in search report | Publication date | Patent family member(s) | Publication date |
|---|---|---|---|
| US 2013296461 A1 | 07-11-2013 | CN 104470995 A | 25-03-2015 |
| | | CN 107936663 A | 20-04-2018 |
| | | EP 2847285 A2 | 18-03-2015 |
| | | EP 3006505 A1 | 13-04-2016 |
| | | US 2013296461 A1 | 07-11-2013 |
| | | WO 2014027249 A2 | 20-02-2014 |
| WO 2011017097 A1 | 10-02-2011 | AU 2010281411 A1 | 08-12-2011 |
| | | CA 2764434 A1 | 10-02-2011 |
| | | CN 102597132 A | 18-07-2012 |
| | | EP 2459659 A1 | 06-06-2012 |
| | | HK 1173172 A1 | 10-05-2013 |
| | | JP 5767219 B2 | 19-08-2015 |
| | | JP 6051270 B2 | 27-12-2016 |
| | | JP 2013500388 A | 07-01-2013 |
| | | JP 2015232132 A | 24-12-2015 |
| | | US 2011177146 A1 | 21-07-2011 |
| | | US 2016262385 A1 | 15-09-2016 |
| | | WO 2011017097 A1 | 10-02-2011 |
| WO 0047682 A1 | 17-08-2000 | AT E319786 T1 | 15-03-2006 |
| | | AU 2569000 A | 29-08-2000 |
| | | DE 60026492 T2 | 26-10-2006 |
| | | EP 1165701 A1 | 02-01-2002 |
| | | ES 2258000 T3 | 16-08-2006 |
| | | GB 2362890 A | 05-12-2001 |
| | | IE 20000085 A1 | 20-09-2000 |
| | | IE 20050123 A1 | 29-06-2005 |
| | | JP 2002541266 A | 03-12-2002 |
| | | US 2002011187 A1 | 31-01-2002 |
| | | US 2004259995 A1 | 23-12-2004 |
| | | WO 0047682 A1 | 17-08-2000 |
| WO 0036029 A1 | 22-06-2000 | AU 1788600 A | 03-07-2000 |
| | | EP 1171532 A1 | 16-01-2002 |
| | | PL 366241 A1 | 24-01-2005 |
| | | WO 0036029 A1 | 22-06-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5529749 A
- WO 2016089696 A
- WO 2022192565 A


### Non-patent literature cited in the description


- **MEIER** ; **VESTHUES** ; **DANIELMEIER** ; **KRUPPA** ; **SQUILLER**. Polyurethanes. Coatings, Adhesives and Sealants. Vincentz Network, 2019
- **ULRICH POTH**. Polyester and Alkyd Resin: Technical Basics and Applications. Vincentz Network, 2020
- **ULRICH ZORLL**. European Coatings Handbook. Vincent Verlag, 2000